# EUROPEAN PATENT SPECIFICATION

(11) **EP 1 801 531 B1**
(45) Date of publication and mention of the grant of the patent: **27.07.2011**
(21) Application number: 06026297.9
(22) Date of filing: 19.12.2006
(51) Int. Cl.: F28D 15/02, F28D 15/06

(54) **Waste heat collecting apparatus**
Abwärmeaufnahmevorrichtung
Appareil de collecte de la chaleur des déchets

(30) Priority: 27.12.2005 JP 2005375667; 20.12.2005 JP 2005366895; 26.07.2006 JP 2006203780; 21.11.2006 JP 2006314684
(43) Date of publication of application: 27.06.2007
(73) Proprietor: DENSO CORPORATION, Kariya-city, Aichi-pref. 448-8661 (JP)
(72) Inventor: Hamada, Shinichi c/o DENSO CORPORATION, Kariya City, Aichi-pref. 448-8661 (JP); Miyagawa, Masahi c/o DENSO CORPORATION, Kariya City, Aichi-pref. 448-8661 (JP); Inoue, Seiji c/o DENSO CORPORATION, Kariya City, Aichi-pref. 448-8661 (JP)
(74) Representative: Klingseisen, Franz

(56) References cited:
- EP-A1- 0 999 423
- WO-A-91/18252
- WO-A-99/30091
- DE-A1- 3 031 624
- GB-A- 2 003 596
- JP-A- 62 294 705

## Description

The present invention relates to a waste heat collecting apparatus for collecting waste heat from an internal combustion engine to utilize the collected heat for heating engine coolant, wherein the waste heat collecting apparatus has a loop-type heat pipe. The invention is preferably applied to an automotive vehicle having the internal combustion engine.

A waste heat collecting apparatus according to the preamble of claim 1 is known from JP-44-45393.

A heat exchanger of a heat pipe type is known in the art, for example, as disclosed in Japanese Patent Publication No. H4-45393. A conventional heat exchanger of this prior art has a loop-type heat pipe, wherein a flow control valve is provided in a fluid passage (condensed coolant passage) connecting a condensing portion with a vaporizing portion for controlling an amount of working fluid flowing through the fluid passage.

In the above conventional heat exchanger, a bypass passage is provided, which is bifurcated from another fluid passage (vapor flow passage) connecting the vaporizing portion to the condensing portion. A driving portion of the flow control valve is provided in the bypass passage, such that the driving portion is operated depending on vapor pressure (higher than a predetermined pressure), which is applied to the driving portion from the vapor flow passage (the vaporizing portion). The flow control valve further has a driven portion on a side of the condensing portion for closing the condensed coolant passage in association of the operation of the driving portion.

The driving portion is formed as a diaphragm motor, which is composed of a diaphragm having a valve body connected to the diaphragm. The driven portion is formed as an emergency closing valve for closing the condensed coolant passage, which is composed of a link moved in association with displacement of the diaphragm and a cable. A communication pipe is further provided between the diaphragm motor and the emergency closing valve for discharging vapor entered the diaphragm motor to the emergency closing valve.

Opening degree of the flow control valve is adjusted depending on temperature of the working fluid in the condensing portion. As a result, an amount of heat transfer to another working fluid is adjusted, and an inner pressure of the heat pipe is controlled at a value, which is within a desired range.

In the case that the flow control valve is kept opened due to any abnormal condition, and the vapor pressure exceeds a predetermined pressure as a result of excessive vaporization at the vaporizing portion, the driving portion is operated so that the condensed coolant passage is closed by the driven portion which is operated in association with the driving portion. Accordingly, the circulation of the working fluid is forcibly stopped to prevent an abnormal increase of the vapor pressure higher than the predetermined pressure. A blowout of the heat pipe is thereby prevented.

According to the above conventional heat exchanger, however, the driving portion is provided in the vapor flow passage, whereas the driven portion is provided in the condensed coolant passage. It is necessary, therefore, to provide the link and wire for operatively associating both of them. Furthermore, the communicating pipe is necessary for discharging the vapor (which has entered the diaphragm motor) to the emergency closing valve. As above, the structure of the heat exchanger is complicated as a whole.

In addition, when the operation for the heat pipe is stopped due to the closing of the emergency closing valve, the inner pressure of the heat pipe is decreased and thereby the emergency closing valve is opened again in a short period. An inter-rock means is, for example, necessary for the link and/or cable in order to avoid the above re-open of the emergency closing valve. This is also one of reasons that the structure of the heat exchanger becomes complicated.

The present invention is made in view of the foregoing problems, and has an object to provide a waste heat collecting apparatus having a loop-type heat pipe, according to which collection of the excessive heat is avoided with a simple structure.

According to one of features of the present invention, a waste heat collecting apparatus has a loop-type heat pipe (101). The loop-type heat pipe (101) has a vaporizing portion (110) arranged in an area for exhaust gas passage (113, 114, 118) for vaporizing working fluid filled in the heat pipe (101) with heat contained in exhaust gas from an engine (10); a condensing portion (130) for condensing working fluid, which is vaporized in the vaporizing portion (110), by engine coolant for the engine (10); and a connecting passage (161, 116a, 163, 164, 165) for connecting the condensing portion (130) with the vaporizing portion (110).

The waste heat collecting apparatus further has a valve device (150, 170) provided in the connecting passage (161, 116a, 163, 164, 165) between the condensing portion (130) and the vaporizing portion (110) for opening or closing the connecting passage (161, 116a), wherein the valve device (150, 170) has a driving portion (153, 171) and a valve body (155, 173) connected with the driving portion (153, 171) for opening or closing the connecting passage.

The driving portion (153, 171) is operated by at least one of the operating parameters, which comprises
- inner pressure of the working fluid in the heat pipe (101),
- temperature of the working fluid in the heat pipe (101), and
- temperature of the coolant,
wherein the valve device (150, 170) is provided at a downstream side of the condensing portion (130) or an upstream side of the vaporizing portion (110).

According to another feature of the invention, a waste heat collecting apparatus having a loop-type heat pipe (101) comprises: a vaporizing portion (110) arranged in an area for exhaust gas passage (113, 114, 118) for vaporizing working fluid filled in the heat pipe (101) with heat contained in exhaust gas from an engine (10), wherein the vaporizing portion (110) having multiple tubes (111) vertically extending, and a lower and an upper header tank portion (116, 117) provided at both longitudinal ends of the multiple tubes (111) ; a water tank (140) provided at an upper side of the vaporizing portion (110), through which coolant for the engine flows; and a condensing portion (130) provided in an inside of the water tank (140) for condensing working fluid, which is vaporized in the vaporizing portion (110), by means of heat exchange with the coolant flowing through the water tank (140), wherein an upstream end of the condensing portion (130) is connected with the upper header tank portion (117) and a downstream end of the condensing portion (130) is operatively connected to the lower header tank portion (116).

The waste heat collecting apparatus further comprises: a condensed water return portion (160) provided between the downstream end of the condensing portion (130) and the lower header tank portion (116); and a valve device (150) provided in the water tank (140) for opening or closing a fluid passage between the downstream end of the condensing portion (130) and the condensedwater return portion (160), wherein the valve device (150) has a driving portion (153) and a valve body (155) connected with the driving portion (153) for opening or closing the fluid passage, and the driving portion (153) is operated by an inner pressure of the working fluid in the heat pipe (101).

According to a further feature of the invention, a waste heat collecting apparatus having a loop-type heat pipe (101) comprises: a vaporizing portion (110) arranged in an area for exhaust gas passage (113, 114, 118) for vaporizing working fluid filled in the heat pipe (101) with heat contained in exhaust gas from an engine (10), wherein the vaporizing portion (110) having multiple tubes (111) vertically extending, and a lower and an upper header tank portion (116, 117) provided at both longitudinal ends of the multiple tubes (111); a water tank (140) provided at a horizontal side of the vaporizing portion (110), through which coolant for the engine flows; a condensing portion (130) provided in an inside of the water tank (140) for condensing working fluid, which is vaporized in the vaporizing portion (110), by means of heat exchange with the coolant flowing through the water tank (142), wherein an upstream end of the condensing portion (130) is connected with the upper header tank portion (117) and a downstream end of the condensing portion (130) is operatively connected to the lower header tank portion (116).

The waste heat collecting apparatus further comprises a valve device (150) provided in the water tank (140) at a downstream side of the condensing portion (130) for opening or closing a fluid passage between the downstream end of the condensing portion (130) and the lower header tank portion (116), wherein the valve device (150) has a driving portion (153) and a valve body (155) connected with the driving portion (153) for opening or closing the fluid passage, and the driving portion (153) is operated by an inner pressure of the working fluid in the heat pipe (101).

The above and other objects, features and advantages of the present invention will become more apparent from the following detailed description made with reference to the accompanying drawings. In the drawings:
Fig. 1 is a schematic view showing a waste heat collecting system installed in an automotive vehicle according to a first embodiment of the present invention;
Fig. 2 is a cross sectional view showing a waste heat collecting apparatus according to the first embodiment;
Fig. 3 is a cross sectional view taken along a line III-III in Fig. 2;
Fig. 4 is a cross sectional view showing a valve device for the first embodiment in a valve opened condition;
Fig. 5 is a cross sectional view showing the valve device for the first embodiment in a valve closed condition;
Fig. 6 is a diagram showing a relation of an inner pressure of a heat pipe with respect to a temperature of engine coolant and heat quantity of exhaust gas;
Fig. 7 is a diagram showing an operation of valve opening and closing for the valve device;
Fig. 8A is a time chart showing a change of the inner pressure of the heat pipe after a start of an engine operation;
Fig. 8B is a time chart showing a change of the temperature of the engine coolant after the start of the engine operation;
Fig. 8C is a time chart showing a change of the heat quantity of the exhaust gas after the start of the engine operation;
Fig. 9 is a cross sectional view showing a valve device according to a second embodiment;
Fig. 10 is a cross sectional view showing a valve device according to a third embodiment;
Fig. 11 is a cross sectional view showing a waste heat collecting apparatus according to a fourth embodiment;
Fig. 12 is a cross sectional view showing a waste heat collecting apparatus according to a fifth embodiment;
Fig. 13 is a cross sectional view showing a modified waste heat collecting apparatus according to the fifth embodiment;
Fig. 14 is a cross sectional view showing a waste heat collecting apparatus according to a sixth embodiment;
Fig. 15 is a cross sectional view showing a waste heat collecting apparatus according to a seventh embodiment;
Fig. 16 is an enlarged schematic view showing a reverse flow preventing portion of the seventh embodiment;
Fig. 17 is an enlarged schematic view showing a modification of the reverse flow preventing portion;
Fig. 18 is an enlarged schematic view showing a restricting portion; and
Fig. 19 is a cross sectional view showing a waste heat collecting apparatus in an inclined position.

### (First Embodiment)

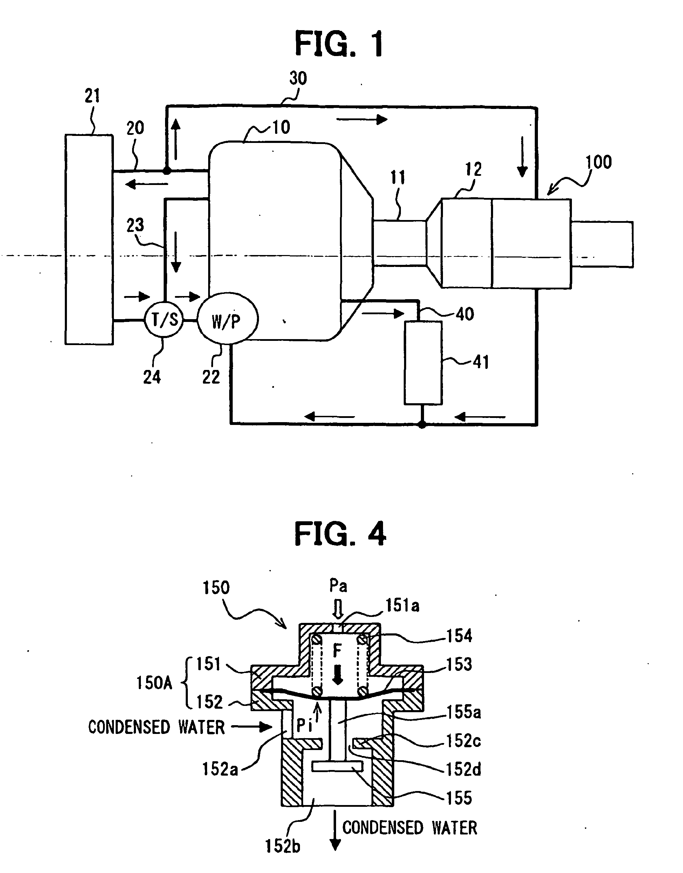

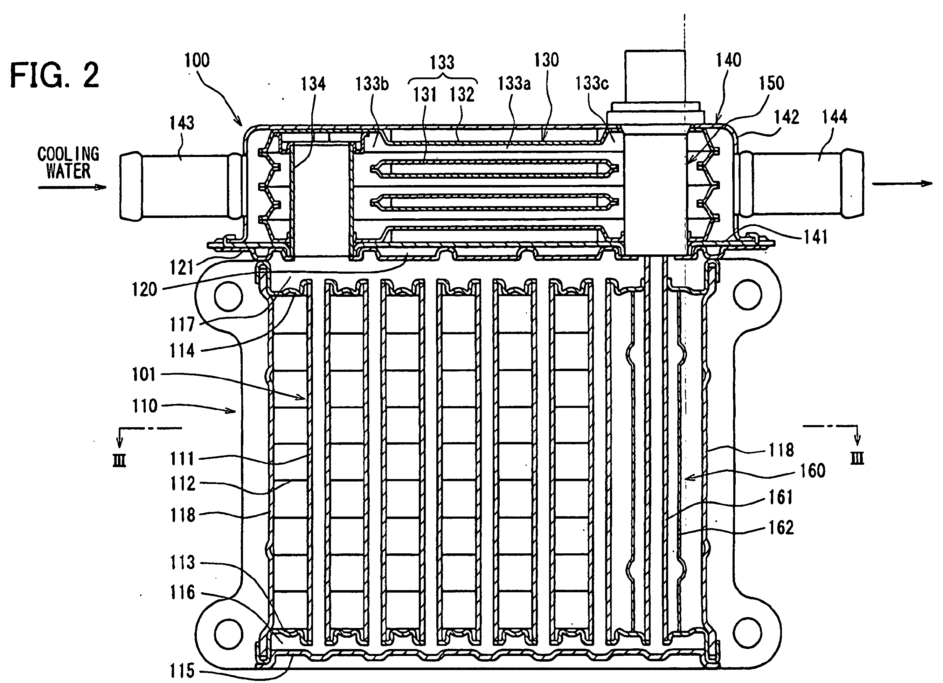

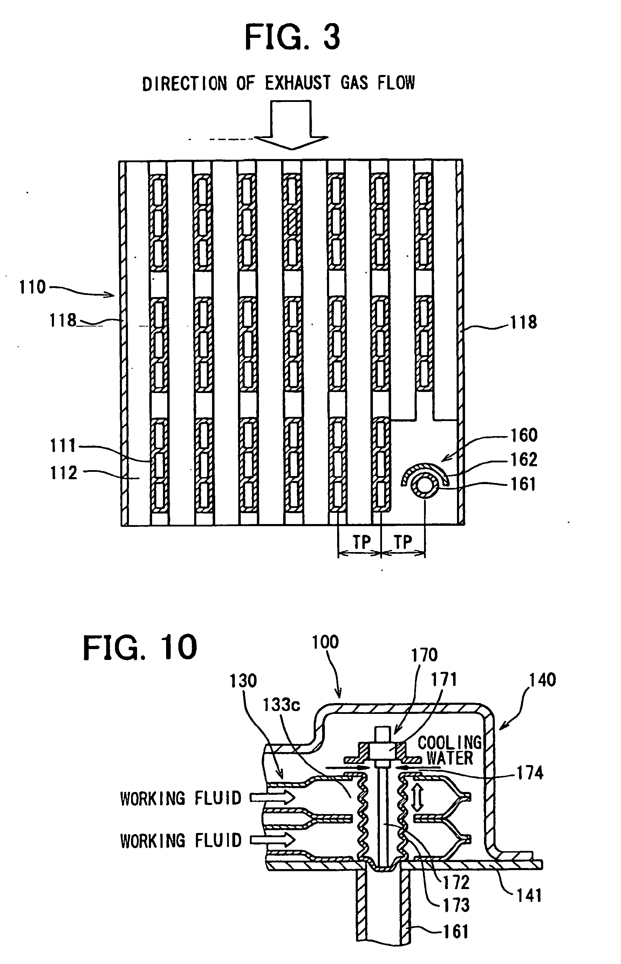

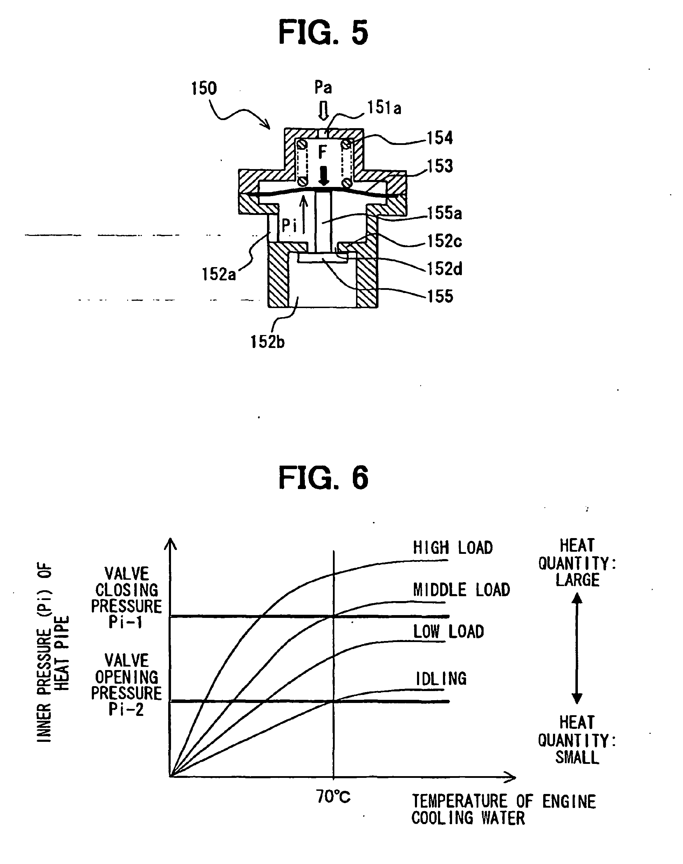

A waste heat collecting apparatus 100 according to a first embodiment of the present invention is applied to an automotive vehicle having an engine 10 for producing a driving power for the vehicle. The waste heat collecting apparatus 100 is provided in an exhaust pipe 11 and a waste heat collecting circuit 30. More detailed structure will be explained with reference to Figs. 1 to 5, wherein Fig. 1 is a schematic view showing the waste heat collecting apparatus 100 installed in the vehicle, Fig. 2 is a cross sectional view of the waste heat collecting apparatus 100, Fig. 3 is a cross sectional view taken along a line III-III in Fig. 2, Fig. 4 is a cross sectional view showing a valve device 150 provided in the waste heat collecting apparatus in a valve opened condition, and Fig. 5 is a cross sectional view showing the valve device 150 in a valve closed condition.

As shown in Fig. 1, the engine 10 is a water cooled type internal combustion engine, and has the exhaust pipe 11 for emitting exhaust gas which is produced after combustion of fuel in the engine 10. A catalytic converter 12 is provided in the exhaust pipe 11 for purifying the exhaust gas. The engine 10 further has a radiator circuit 20 through which engine coolant is circulated, the waste heat collecting circuit 30 which is formed separately from the radiator circuit and through which the engine coolant is circulated, and a heater circuit 40 through which the engine coolant is also selectively circulated for heating air to be blown into a passenger room of the vehicle.

A radiator 21 is provided in the radiator circuit 20 for cooling down the engine coolant, circulated by a water pump 22, by means of heat exchange with external air. A bypass passage 23 is provided in the radiator circuit 20 for bypassing the radiator 21. An amount of the engine coolant flowing into the radiator 21 as well as an amount of the engine coolant flowing through the bypass passage 23 is adjusted by a thermostat 24. In an operation of warming up the engine 10, the amount of the engine coolant flowing through the bypass passage 23 is increased to facilitate the warm-up of the engine 10. Namely, super cooling of the engine coolant is prevented in the engine warming-up operation.

One end of the waste heat collecting circuit 30 is bifurcated from the radiator circuit 20 on an outlet side of the engine 10, whereas the other end thereof is connected to an inlet side of the engine 10, wherein the engine coolant is circulated through the waste heat collecting circuit 30 by the water pump 22. A water tank 140 (a condensing portion 130) of the waste heat collecting apparatus 100 is provided in the waste heat collecting circuit 30, which is described below.

One end of the heater circuit 40 is connected to another outlet port of the engine 10 and the other end thereof is connected to the waste heat collecting circuit 30 at a downstream side of the waste heat collecting apparatus 100. A heater core 41 is provided in the heater circuit 40, and the engine coolant is also circulated through the heater circuit 40 by the water pump 22. The heater core 41 is arranged in a unit casing (not shown) of an air-conditioning unit, and heats the air blown by a blower fan (not shown) by means of heat exchange with hot water (the engine coolant).

As shown in Figs. 2 and 3, the waste heat collecting apparatus 100 is composed of a loop-type heat pipe 101 having a vaporizing portion 110, the condensing portion 130, the valve device 150, and a condensed water returning portion 160, which are connected in this order. An insertion portion (not shown) is provided in the heat pipe 101. The heat pipe 101 is evacuated (depressurized) through the insertion portion, and the insertion portion is tightly closed after working fluid is filled into the heat pipe 101. The working fluid in this embodiment is water. The boiling temperature of the water is 100 °C at normal atmosphere (1 atm). However, since the heat pipe 101 is depressurized (e.g. 0.1 atm), the boiling temperature of the working fluid in the heat pipe 101 becomes 5 to 10 °C. Alcohol, fluorocarbon, Freon gas and so on may be used as the working fluid.

The condensing portion 130 as well as the valve device 150 is arranged in the water tank 140. Each part of the waste heat collecting apparatus 100 is made of stainless material having high corrosion resistance. And those parts are integrally fixed (soldered) to each other by soldering material clad on fixing portions, after those parts are assembled.

The vaporizing portion 110 is composed of multiple tubes 111, multiple fins 112, a lower plate member 113, an upper plate member 114, and a lower tank plate 115. As shown in Figs. 2 and 3, each of the tubes 111 is formed into a flat tube shape, and its longitudinal direction is arranged to be a vertical direction. Multiple tubes 111 are arranged in a horizontal direction (a right-left direction in Fig. 2 or 3) at an equal distance (with a tube pitch "TP"). As more exactly shown in Fig. 3, the tubes 111 are composed of three lines of tubes, each of which extends in the right-left direction in Fig. 3. Both longitudinal ends of the tubes 111 are respectively fixed to the lower and upper plate members 113 and 114, each of which has multiple apertures. Multiple plate-type fins 112 made of thin plate material are disposed between the tubes 111, so that the fins 112 are fixed to (contacted with) outer surfaces of the tubes 111.

The lower tank plate 115 is provided so as to oppose to the lower plate member 113 and the lower ends of the tubes 111, so that a lower header portion is formed between the lower tank plate 115 and the lower plate member 113. A lower passage 116 of the lower header portion formed between the lower tank plate 115 and the lower plate member 113 is communicated with each lower end of the tubes 111, so that the condensed working fluid is distributed to each of the tubes 111.

A heat insulating plate 121 is provided, in a similar manner to the lower tank plate 115, so as to oppose to the upper plate member 114 and the upper ends of the tubes 111, so that an upper header portion is formed between the heat insulating plate 121 and the upper plate member 114. The heat insulating plate 121 is formed into a wave form, as shown in Fig. 2. An upper passage 117 of the upper header portion formed between the heat insulating plate 121 and the upper plate member 114 is communicated with each upper end of the tubes 111, so that the working fluid from each of the tubes 111 is collected in the upper passage 117. A pair of side plates 118 is provided at both horizontal sides (the right and left sides) of the waste heat collecting apparatus 100 as a reinforcing and fixing member.

Multiple passages for exhaust gas are formed in a space surrounded by the upper and lower plate members 114 and 113 and the pair of side plates 118 (hereinafter also referred to as exhaust gas passage). As shown in Figs. 2 and 3, the exhaust gas flows in a direction perpendicular to the sheet of Fig. 2 through the exhaust gas passage.

The water tank 140 is composed of a lower water tank plate 141 of a flat shape and an upper water tank member 142 having a U-shape in its cross section. An inside space defined by the lower water tank plate 141 and the upper tank member 142 extends in a direction, which coincides with the directions of three lines of the tubes 111. The water tank 140 is formed at an upper side of the upper passage 117.

An inlet pipe 143 for the engine coolant is provided at a left end of the water tank 140, and an outlet pipe 144 is provided at a right end of the water tank 140. The condensing portion 130 is arranged in the inside of the water tank 140.

In the condensing portion 130, a fluid passage is formed, which is similar to a so-called drawn-cup type heat exchanger, wherein multiple tubes 133 formed of pairs of tube plates 131 and 132 are built up. The condensing portion 130 is composed of multiple passage portions 133a and a pair of tank portions 133b and 133c at both longitudinal ends of the passage portions 133a. Each of the tank portions 133b and 133c is communicated in a direction of building up the tubes 133 (in a vertical direction).

A vapor inlet pipe 134 is provided in the tank portion 133b; wherein one end (a lower end) of the vapor inlet pipe 134 is communicated with the upper passage 117 and the other end (an upper end) thereof is opened to an upper space of the tank portion 133b. The upper passage 117 is communicated with the inside space of the tank portion 133b through the vapor inlet pipe 134 and further communicated with the tank portion 133c through the passage portions 133a of the tubes 133. As above, the upper header portion (117) of the vaporizing portion 110 is communicated with the condensing portion 130 through the vapor inlet pipe 134. The pipe 134 is also referred to as a connecting passage for connecting the vaporizing portion 110 with the condensing portion 130.

Multiple air spaces 120 are formed between the heat insulating plate 121 of the wave form and the flat-shaped lower water tank plate 141, wherein the air spaces 120 function as an heat insulating portion between the vaporizing portion 110 and the condensing portion 130.

The condensed water returning portion 160 is formed by a return pipe 161 and a heat insulating wall 162. The return pipe 161 is a single pipe having a circular cross section, a longitudinal length of which is almost equal to that of the tubes 111. One end (an upper end) of the return pipe 161 upwardly extends through the upper passage 117 and is communicated with an inside of the tank portion 133c of the condensing portion 130, whereas the other end (a lower end) thereof is communicated with the lower passage 116 of the vaporizing portion 110. The return pipe 161 is arranged in the space of the vaporizing portion 110 (namely, in the area of the exhaust gas passages), such that the return pipe 161 is separated from the neighboring tube 111 with a distance equal to the tube pitch "TP", as shown in Fig. 3. As seen from Fig. 3, the return pipe 161 is arranged in the line of the tubes 111, which are at the most downstream side of the exhaust gas flow. Not only one return pipe but multiple return pipes (less than the number of the tubes 111) may be provided. The return pipe 161 is also referred to as a connecting passage for connecting the condensing portion 130 with the vaporizing portion 110.

The heat insulating wall 162 is arranged at an upstream side of the return pipe 161. The heat insulating wall 162 is formed into a semi-circular shape, as shown in Fig. 3. However, the heat insulating wall 162 may be formed into a circular shape, so that it fully covers the return pipe 161.

The valve device 150 is arranged in the tank portion 133c and forms a connecting passage for connecting the passage portion 133a with the return pipe 161. The valve device 150 is a diaphragm type valve control device for controlling a valve opening degree in accordance with the inner fluid pressure in the heat pipe 101.

The valve device 150 is inserted into the tank portion 133c from an upper side of the water tank 140, so that an outer peripheral portion of its lower end extends through the tank portion 133c and the water tank plate 141. The outer peripheral portion of the lower end is brought into contact with the heat insulating plate 121, and surrounds the opening end (upper end) of the return pipe 161. The valve device 150 is arranged at a downstream side of the working fluid in the condensing portion 130.

As shown in Figs. 4 and 5, the valve device 150 is composed of a housing body 150A having an upper casing 151 and a lower casing 152, a diaphragm 153, a spring 154 and a valve body 155.

The housing body 150A is formed into a cylindrical shape and has a large diameter portion at its intermediate portion. An air port 151a is provided at a top end of the upper casing 151 for communicating the inside of the housing body 150A with the ambient air. A water inlet port 152a is provided at a side wall of the lower casing 152, through which the condensed water flows into the inside of the housing body 150A. A water outlet port 152b is provided at a lower end of the lower casing 152, through which the condensed water flows out from the housing body 150A. The water outlet port 152b is connected to the upper end of the return pipe 161. A valve seat (a gate portion) 152c having an aperture 152d is formed in the inside of the lower casing 152, between the water inlet and outlet ports 152a and 152b.

The diaphragm 153 is disposed between the upper and lower casings 151 and 152 for applying a driving force to the valve body 155. The spring 154 is arranged between the upper casing 151 and the diaphragm 153 for biasing the diaphragm 153 downwardly (in a direction indicated by an arrow in Fig. 4). The diaphragm 153 is upwardly or downwardly moved in accordance with a force balanced between a downward force (the ambient pressure "Pa" introduced into the inside of the upper casing 151 through the air port 151a and the spring force "F") and an upward force (the inner pressure "Pi" of the working fluid introduced into the inside of the lower casing 152 from the heat pipe 101 through the water inlet port 152a

The valve body 155 is formed of a flat disc and arranged to oppose to the lower side of the gate portion 152c. The valve body 155 is integrally connected to the diaphragm 153 via a connecting rod 155a. Accordingly, the valve body 155 is moved upwardly or downwardly together with the diaphragm 153 in order to close or open the aperture 152d of the gate portion 152c.

When the inner pressure "Pi" of the working fluid is increased to exceed a first predetermined value "Pi-1" at a predetermined temperature (e.g. 70 °C) of the engine coolant, the valve device closes its passage (the aperture 152d is closed by the valve body 155). On the other hand, when the inner pressure "Pi" is decreased to become lower than a second predetermined value "Pi-2", which is lower than the first predetermined value "Pi-1", the valve device opens its passage (the aperture 152d is opened by the valve body 155). The first predetermined value "Pi-1" is also referred to as a valve closing pressure, and the second predetermined value "Pi-2" is also referred to as a valve opening pressure.

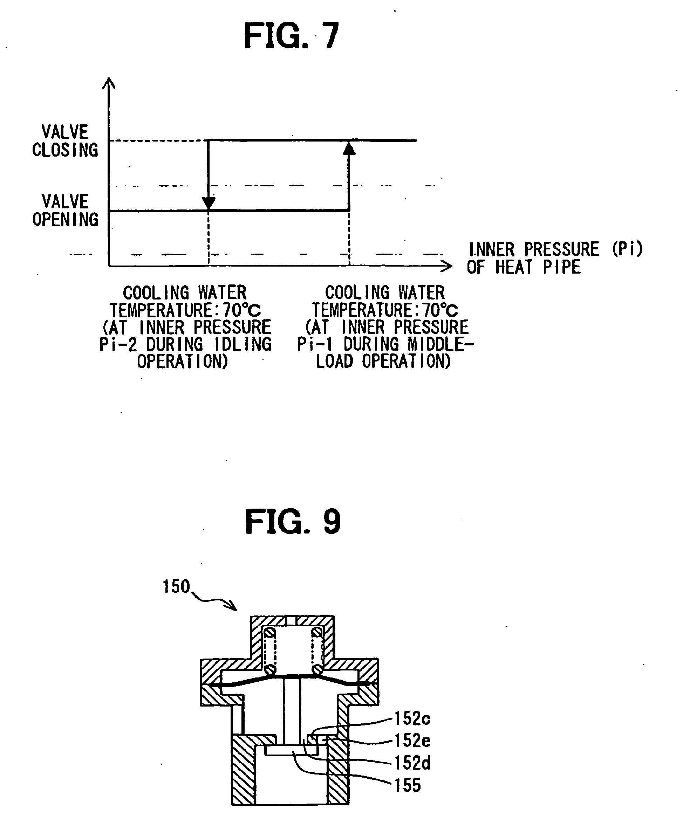

The characteristic feature of valve opening and closing for the valve device 150 will be further explained with reference to Figs. 6 and 7. Fig. 6 shows a relation between the temperature of the engine coolant and the inner pressure "Pi" of the heat pipe 101, with respect to the heat quantity of the exhaust gas. As shown in Fig. 6, the inner pressure "Pi" of the heat pipe 101 is increased as the temperature of the engine coolant is increased. The inner pressure "Pi" of the heat pipe 101 is also increased as the heat quantity of the exhaust gas is increased. The heat quantity of the exhaust gas varies depending on the operational condition of the engine, so that the heat quantity becomes higher at a high-load engine operation whereas the heat quantity becomes lower at a low-load engine operation.

As shown in Fig. 7, the valve opening and closing operation of the valve device 150 has a hysteresis. Namely, the valve device 150 closes its passage at the first predetermined pressure "Pi-1" for the inner pressure, which is attained by the heat quantity during a middle-load engine operation at the temperature of 70 °C of the engine coolant. And the valve device 150 opens its passage at the second predetermined pressure "Pi-2" for the inner pressure, which is attained by the heat quantity during a low-load engine operation (e.g. an engine idling operation) at the temperature of 70 °C of the engine coolant. As explained above, the water is used as the working fluid for the heat pipe 101 in this embodiment. The first predetermined pressure "Pi-1" is selected as a value of 0.1 MPa, whereas the second predetermined pressure "Pi-2" is selected as a value of 0.05 MPa.

The temperature of the saturated vapor for the water corresponds to 100 °C at the inner pressure "Pi" of 0.1 MPa. In most cases, the engine coolant is controlled at around 100 °C by the radiator 21. Therefore, when the inner pressure "Pi" is higher than 0.1 MPa, an operation for collecting the waste heat from the exhaust gas by the engine coolant is stopped by closing the valve device 150, as explained below.

The temperature of the saturated vapor for the water corresponds to 80 °C at the inner pressure "Pi" of 0.05 MPa. The operation for collecting the waste heat from the exhaust gas by the engine coolant is actively carried out by opening the valve device 150, when the inner pressure "Pi" is between 0.05 MPa and 0.1 MPa (the temperature of the engine coolant is between 80 to 100 °C).

According to the waste heat collecting apparatus 100 of the above embodiment, the vaporizing portion 110 is arranged in the exhaust pipe 11 at a downstream side of the catalytic converter 12, and the inlet and outlet pipes 143 and 144 of the water tank 140 are connected to the waste heat collecting circuit 30.

An operation of the waste heat collecting apparatus 100 will be explained.

When the engine operation is started, the water pump 22 is activated by the engine 10, so that the engine coolant starts its circulation in the radiator circuit 20, the waste heat collecting circuit 30, and the heater circuit 40. The exhaust gas combusted in the engine 10 flows through the catalytic converter 12 in the exhaust pipe 11 and is emitted to the atmosphere, wherein the exhaust gas passes through the vaporizing portion 110 (the exhaust gas passage defined by the plate members 113, 114, 118) of the waste heat collecting apparatus 100. The engine coolant circulating in the waste heat collecting circuit 30 flows through the water tank 140 (the condensing portion 130 of the waste heat collecting apparatus 100).

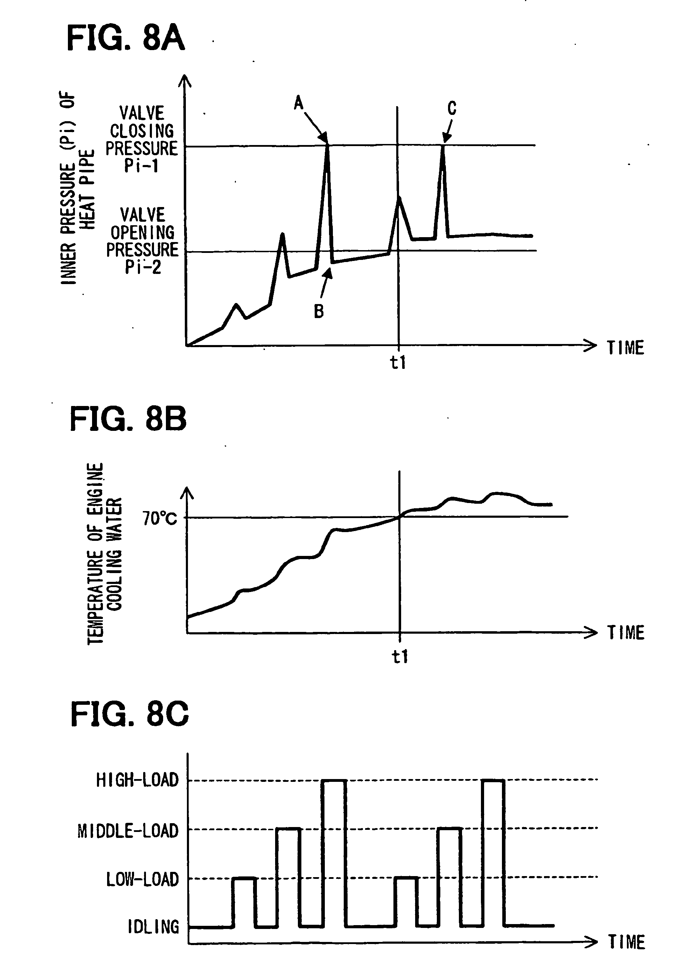

After the engine operation has been started, the temperature of the engine coolant increases as shown in Fig. 8B, the inner pressure "Pi" of the heat pipe 101 is gradually increased as shown in Fig. 8A, and the heat quantity of the exhaust gas varies depending on the engine load as shown in Fig. 8C. Accordingly, the inner pressure "Pi" of the heat pipe varies in accordance with the various engine operational conditions, such as a vehicle acceleration, a vehicle deceleration, a vehicle stop, and so on (as indicated by projecting points in Fig. 8A).

When the inner pressure "Pi" of the heat pipe 101 is lower than the valve closing pressure "Pi-1", the valve body 155 opens the aperture 152d, as already explained with reference to Fig. 7. Therefore, the working fluid (water) in the heat pipe 101 receives the heat at the vaporizing portion 110 from the exhaust gas flowing through the exhaust pipe 11, to start the vaporization. The working fluid (steam) upwardly flows in the tubes 111, and flows into the condensing portion 130 (the tank portion 133b and the passage portion 133a) through the upper passage 117 and the vapor inlet pipe 134. The steam flowing into the condensing portion 130 is then cooled down by the engine coolant flowing from the waste heat collecting circuit 30 into the water tank 140, and condensed to the condensed water. The condensed water flows into the lower passage 116 of the vaporizing portion 110 through the water inlet port 152a of the valve device 150, the aperture 152d opened by the valve body 155, the water outlet port 152b, and the return pipe 161. The condensed water flowing through the return pipe 161 is prevented by the heat insulating wall 162 from vaporizing by the heat from the exhaust gas.

As above, the heat from the exhaust gas is transmitted to the working fluid, and transferred from the vaporizing portion 110 to the condensing portion 130. The heat is emitted as the condensation latent heat, when the steam is condensed to the water at the condensing portion 130, so that the engine coolant flowing through the waste heat collecting circuit 30 is heated.

Accordingly, the operation for warming up the engine 10 is facilitated. A friction loss in the engine 10 is thereby reduced. Furthermore, an increase of fuel amount, which is otherwise necessary for improving a smooth starting operation as well as a quick warming operation for the engine, can be suppressed. As a result, a fuel consumption ratio is improved. In addition, a heating performance by the heater core 41 is improved.

When the inner pressure "Pi" of the heat pipe 101 exceeds the valve closing pressure "Pi-1", as indicated by a point "A" in Fig. 8A, the valve body 155 temporarily closes the aperture 152d. The condensed water is thereby prevented from flowing into the return pipe 161, so that the circulation of the working fluid in the heat pipe 101 is stopped. Namely, the collection of the waste heat is stopped. Then, the inner pressure "Pi" of the heat pipe 101 is decreased. When the inner pressure "Pi" becomes lower than the valve opening pressure "Pi-2", as indicated by a point "B" in Fig. 8A, the valve body 155 again opens the aperture 152d, to re-start the operation of the waste heat collection.

When the temperature of the engine coolant exceeds 70 °C after the point "B" (at a time point of "t1" in Fig. 8B), and when the inner pressure "Pi" becomes higher than the valve closing pressure "Pi-1", as indicated by a point "C" in Fig. 8A, the valve body 155 again closes the aperture 152d. As a result, the inner pressure "Pi" is decreased due to the stop of the operation of the heat pipe 101. So long as the engine is in its operation, the heat quantity of the exhaust gas does not become lower than that at the engine idling operation. This means that the inner pressure "Pi" of the heat pipe 101 does not become lower than the valve opening pressure "Pi-2" like the point "B". Therefore, the aperture 152d is not opened by the valve body after the time point "t1", and the operation for the waste heat collection is continuously stopped.

When the engine operation is stopped, there exists no longer the heat quantity of the exhaust gas, and the temperature of the engine coolant is also decreased. The inner pressure "Pi" of the heat pipe 101 is thereby decreased to be lower than the valve opening pressure "Pi-2", and the valve body 155 opens the aperture 152d.

As above, according to the waste heat collecting apparatus 100 of the embodiment, the valve device 150 is arranged at the downstream side of the condensing portion 130, wherein the valve device 150 is composed of the diaphragm 153 for sensing the inner pressure "Pi" of the heat pipe 101 and the valve body 155 for moving integrally with the diaphragm 153 to open or close the passage for the heat pipe 101. Accordingly, the structure of the valve device 150 is simpler. Furthermore, since the operation for the waste heat collection is stopped depending on the inner pressure "Pi", which is decided in accordance with the temperature of the engine coolant and the heat quantity of the exhaust gas, an overheating of the engine coolant by the exhaust gas can be avoided. Namely, an overheat of the engine can be avoided.

In addition, the valve device 150 is provided with a hysteresis characteristic for opening and closing operation. Namely the aperture 152d is closed when the inner pressure "Pi" of the heat pipe 101 is higher than the valve closing pressure "Pi-1", whereas the aperture 152d is opened when the inner pressure "Pi" of the heat pipe 101 is lower than the valve opening pressure "Pi-2" , wherein the pressure "Pi-2" is lower than the pressure "Pi-1". Accordingly, a hunting operation of the valve device 150 (a hunting between the valve closing position and valve opening position of the valve body 155) can be prevented, even when a small variation for the inner pressure "Pi" of the heat pipe 101 occurs. As a result, a stable operation for the waste heat collection and a stable stopping operation of the waste heat collection can be realized.

The waste heat collecting apparatus 100 of the present invention can be applied to a hybrid vehicle. In the hybrid vehicle, the engine operation is often temporally stopped even during the vehicle is running. Therefore, the temperature of the engine coolant may be decreased during the running of the vehicle. The inner pressure "Pi" of the heat pipe 101 varies in a more complicated manner compared with a general vehicle, so that the start and stop of the waste heat collecting operation are repeated more often than the general vehicle. However, according to the present invention, the overheat of the engine coolant is likewise prevented and the overheat of the engine for the hybrid vehicle can be surely prevented.

According to the above embodiment, multiple tubes 111 are provided in the vaporizing portion 110, so that a heat receiving area is increased to facilitate the vaporization of the working fluid at the vaporizing portion 110. The heat transferring amount from the vaporizing portion 110 to the condensing portion 130 is thereby increased.

In addition, the heat insulating portion 120 is provided between the vaporizing portion 110 and the condensing portion 130, so that the vaporizing portion 110 is prevented from being cooled down by the engine coolant flowing through the condensing portion 130. Therefore, the condensing operation in the vaporizing portion 110 is suppressed. A proper heat transfer can be realized, even when the condensing portion 130 is provided closely to and at the upper side of the vaporizing portion 110. The heat insulating portion 120 is formed by the multiple air spaces formed between the heat insulating plate 121 and the water tank plate 141. As a result, the heat insulating portion 120 can be formed by a simple manner.

In addition, the longitudinal length of the return pipe 161 is made to be almost equal to that of the tubes 111, so that the condensing portion 130 can be assembled to the vaporizing portion 110 in a compact manner. Furthermore, the return pipe 161 is arranged in the space for the vaporizing portion 110 (the exhaust gas passage area) together with multiple tubes 111, so that the return pipe 161 can be assembled together with the multiple tubes 111. As a result, a manufacturing process for the waste heat collecting apparatus 100 can be made simpler.

In addition, the heat insulating wall 162 is provided at the upstream side of the return pipe 161, so that the heat transfer from the exhaust gas to the condensed water flowing through the return pipe 161 is suppressed. Therefore, the vaporization of the working fluid (the condensed water) in the return pipe 161 can be suppressed, to achieve a smooth return flow of the condensed water.

In addition, the return pipe 161 is arranged at the downstream side of the exhaust gas flow, namely at the line of the tubes 111 which is arranged at the downstream side among other lines of tubes 111. The temperature of the exhaust gas (the heat quantity of the exhaust gas) becomes lower, as the exhaust gas flows in the downstream direction. Accordingly, the vaporization of the condensed water in the return pipe 161 can be also suppressed in this meaning.

As above, the waste heat collecting apparatus 100 can be obtained, which has a high performance for the heat transfer, which is compact in size, and which can avoid an excessive collection of the waste heat.

According to the above embodiment, the valve closing pressure of the valve body 155 for the valve device 150 is selected as the value of 0.1 MPa, whereas the valve opening pressure thereof is selected as the value of 0.05 MPa. However, the other values may be selected for the valve closing and opening pressures. For example, the valve opening pressure may be selected as the value of 0.6 kPa, while the valve closing pressure is selected as the same value of 0.1 MPa. In the case that the valve opening pressure is selected as the value of 0.6 kPa, the temperature of the saturated vapor for the water corresponds to 0 °C. Since the water may not be frozen above that temperature (above that pressure), this value (0.6 kPa) can be regarded as one of fundamental conditions for performing the heat transfer operation. In case of 0.6 kPa for the valve opening pressure, the range for the waste heat collecting operation can be enlarged to its maximum value.

### (Second Embodiment)

Fig. 9 shows a second embodiment of the invention. The valve device 150 of the second embodiment differs from that of the first embodiment in that a bypass aperture 152e (having a smaller opening than that of the aperture 152d) is provided at the valve seat 152c. According to such a modification, even when the aperture 152d is fully closed by the valve body 155, a small amount of the condensed water may return from the condensing portion 130 to the vaporizing portion 110 through the return pipe 161 via the bypass aperture 152e.

In the case that the engine 10 is operating at its high-load, but the radiator 21 has an additional coverage for the cooling operation, the waste heat collecting operation is carried out by the circulation of the working fluid through the bypass aperture 152e. The size of the bypass aperture 152e is decided depending on the additional coverage at the radiator 21, such that the overheat of the engine 10 can be avoided even when the certain amount of the working fluid is circulated through the bypass aperture 152e.

As above, the small amount of the working fluid can be circulated through the bypass aperture 152e even when the aperture 152d is fully closed by the valve body 155. Since the working fluid flows from the condensing portion 130 to the vaporizing portion 110, the vaporizing portion can be cooled, to thereby improve a heat resisting performance of the waste heat collecting apparatus 100.

### (Third Embodiment)

Fig. 10 shows a third embodiment of the invention. The valve device 150 of the first embodiment is replaced by a valve device 170 of a thermo-wax type, wherein the valve device 170 opens and closes the passage depending on the temperature of the engine coolant.

The valve device 170 is composed of a thermo-wax portion 171, a connecting rod 172, and a bellows 173. A wax is filled into the thermo-wax portion 171, which is expanded or contracted depending on the temperature of the coolant. One end (upper end) of the connecting rod 172 is connected with the thermo-wax portion 171, and the other end (lower end) thereof is connected to a lower end of the bellows 173. The connecting rod 172 is moved downwardly or upwardly depending on the expansion or contraction of the wax.

The lower end portion of the bellows 173 acts as a valve body for the valve device 170. The bellows 173 is made of a metal and extendable in a longitudinal direction. One end (upper end) of the bellows 173 has an open end and the other end (lower end) is closed. The thermo-wax portion 171 is connected to the open end of the bellows 173 to close the upper end. A pair of communication ports 174 is provided at the upper portion of the bellows 173 (close to the thermo-wax portion 171), for communicating the inside of the bellows 173 with the outside thereof.

The valve device 170 is arranged in the tank portion 133c of the condensing portion 130, such that the thermo-wax portion 171 is arranged at the upper outer side of the tank portion 133c, and the communication ports 174 are opening to the space outside of the tank portion 133c. The lower end of the bellows 173 is arranged to oppose to a valve seat formed in the water tank plate 141, at which the tank portion 133c is connected to the return pipe 161.

The upper portion of the thermo-wax portion 171 is exposed to the coolant in the water tank 140. The coolant flows into the inside of the bellows 173 through the communication ports 174, so that the lower portion of the thermo-wax portion 171 as well as the connecting rod 172 are exposed to the coolant.

When the temperature of the engine coolant is low, the wax of the thermo-wax portion 171 is contracted and the connecting rod 172 is moved in the upward direction. The lower end of the bellows 173 (acting as the valve body) is also moved upwardly together with the connecting rod 172 so that the valve device 170 opens its passage. Namely, the condensing portion 130 is communicated with the return pipe 161 to carry out the waste heat collecting operation by the apparatus 100.

When the temperature of the engine coolant is increased, the wax of the thermo-wax portion 171 is expanded and the connecting rod 172 is moved in the downward direction. The lower end of the bellows 173 (acting as the valve body) is also moved downwardly together with the connecting rod 172. The valve device 170 closes its passage when the temperature of the engine coolant exceeds a predetermined temperature. Accordingly, the communication between the condensing portion 130 and the return pipe 161 is cut off to stop the waste heat collecting operation by the apparatus 100.

As above, according to the third embodiment, the start or stop of the waste heat collecting operation is carried out depending on the temperature of the engine coolant, so that the control for the temperature of the coolant becomes easier. Furthermore, since the coolant flows into the inside of the bellows 173 through the communication ports 174, the whole portion of the thermo-wax portion 171 is exposed to the coolant. As a result, the valve opening and closing operation of the valve device 170 is not affected by the temperature of the working fluid. Therefore, a more accurate control of the valve opening and closing operation depending on the temperature of the coolant can be realized.

### (Fourth Embodiment)

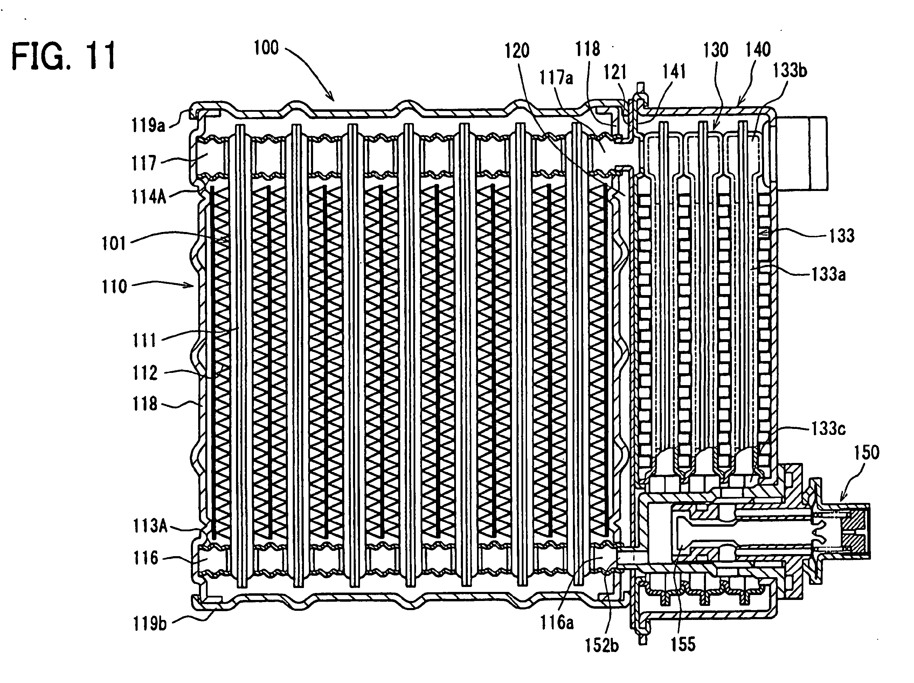

Fig. 11 shows a fourth embodiment of the invention. In the waste heat collecting apparatus 100 according to the fourth embodiment, a position of the condensing portion 130 relative to the vaporizing portion 110 is modified, when compared with the first embodiment. The same reference numerals are used in the fourth embodiment to designate the same or similar parts and devices of the first embodiment.

The multiple tubes 133 of the condensing portion 130 are arranged to be parallel to the tubes 111 of the vaporizing portion 110. Namely, the tubes 13 3 are vertically arranged and the condensing portion 130 is arranged at a horizontal side portion of the vaporizing portion 110.

In the fourth embodiment, each of the tubes 111 of the vaporizing portion 110 is composed of a pair of plate members and corrugated fins 112 are disposed between the neighboring tubes 111. A lower header portion 113A of a cylindrical shape is provided at the lower ends of the respective tubes 111 to form the lower passage 116. In the same manner, an upper header portion 114A of a cylindrical shape is provided at the upper ends of the respective tubes 111 to form the upper passage 117.

The pair of side plates 118 is provided at both horizontal sides of the vaporizing portion 110. An upper and a lower plate 119a, 119b are provided at both vertical sides of the vaporizing portion 110. The exhaust gas passage (of a rectangular shape) is formed by those plates 118, 119a and 119b.

A right hand end 117a of the upper passage 117 (the upper header portion 114A) is directly connected to the tank portion 133b of the condensing portion 130. Therefore, the vapor inlet pipe 134 of the first embodiment is not necessary in the fourth embodiment.

The valve device 150 is provided at the lower end of the condensing portion 130 and fluidcially connected to the lower tank portion 133c (the downstream side tank). The water outlet port 152b of the valve device 150 is directly connected to a right hand end 116a of the lower passage 116 (the lower header portion 113A).

Although not shown in Fig. 11, an inlet pipe and outlet pipe, which correspond to the inlet and outlet pipes 143 and 144 for the coolant, are provided at the condensing portion 130, so that the heat exchange between the working fluid flowing through the tubes 133 and the coolant flowing through the condensing portion 130 (but the outside of the tubes 133) is carried out in the same manner to the first embodiment. The right hand and left hand ends 117a and 116a of the upper and lower header tank portions 117 and 116 are also referred to as a fluid connecting portion.

According to the fourth embodiment, as above, the longitudinal direction of the tubes 133 of the condensing portion 130 is arranged in the same direction (the vertical direction) of the tubes 111 of the vaporizing portion 110, and the condensing portion 130 is arranged at the horizontal side of the vaporizing portion 110. Accordingly, the upper tank portion 133b of the condensing portion 130 can be arranged to oppose to the upper header portion 114A of the vaporizing portion 110, whereas the lower tank portion 133c of the condensing portion 130 (more exactly, the valve device 150 in the embodiment of Fig. 11) can be arranged to oppose to the lower header portion 113A of the vaporizing portion 110. As a result, the vapor inlet pipe 134 and the return pipe 161 of the first embodiment can be eliminated in the fourth embodiment.

### (Fifth Embodiment)

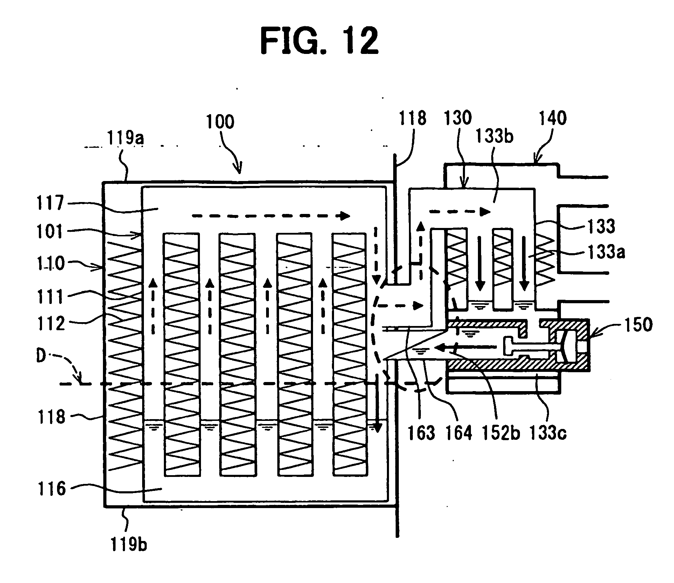

Fig. 12 shows a fifth embodiment of the invention. In the waste heat collecting apparatus 100 according to the fifth embodiment, the fluid connecting portion for fluidically connecting the vaporizing portion 110 with the condensing portion 130 is modified, and the position of the valve device 150 is modified, in comparison with the fourth embodiment. The same reference numerals are used in the fifth embodiment to designate the same or similar parts and devices of the fourth embodiment.

The fluid connecting portion is composed of a fluid flow-in passage 163 and a fluid flow-out passage 164, as shown in Fig. 12, wherein the fluid connecting portion is circled by a dotted line. The fluid flow-in passage 163 is a passage portion for allowing the working fluid (steam) vaporized at the vaporizing portion 110 to flow into the condensing portion 130. For that purpose, the fluid flow-in passage 163 connects one of the tubes 111 of the vaporizing portion 110, which is arranged at a side close to the condensing portion 130, with one of the tubes 133 of the condensing portion 130, which is arranged at a side close to the vaporizing portion 110.

The fluid flow-out passage 164 is a passage portion for returning the condensed water condensed at the condensing portion 130 to the lower passage 116 of the vaporizing portion 110. For that purpose, the fluid flow-out passage 164 connects the water outlet port 152b of the valve device 150 with the tube 111 of the vaporizing portion 110, which is arranged at the side close to the condensing portion 130.

The fluid flow-in and flow-out passages 163 and 164 are arranged closer to each other, in a range in which the passages 163 and 164 are connectable to the tube 111. The fluid flow-in passage 163 is arranged at such a position, which is higher in a vertical direction than a liquid level D of the working fluid (water) in the vaporizing portion 110. The liquid level D here corresponds to a level of the working fluid during the non-operation of the waste heat collecting apparatus 100, wherein the working fluid is not vaporized by the exhaust gas and substantially all of the working fluid is condensed to the water and stored in the vaporizing portion 110.

The valve device 150 is also arranged at the position, which is higher in the vertical direction than the liquid level D. As the fluid flow-out passage 164 is connected to the valve device 150, the fluid flow-out passage 164 is likewise arranged at the position higher than the liquid level D in the vertical direction. A lower end of the condensing portion 130 is designed to be aligned with the valve device 150. Accordingly, the lower end of the condensing portion 130 is higher than the lower end of the condensing portion 110 in the vertical direction.

The waste heat collecting apparatus 100 of the fifth embodiment has the same operation and effects to the fourth (i.e. the first) embodiment. In addition, the fluid flow-in and flow-out passages 163 and 164 are arranged closer to each other, so that heat stress generated at the passage portions 163 and 164 can be reduced.

In the passage portions 163 and 164 for connecting the vaporizing portion 110 and the condensing portion 130 with each other, heat stress (i.e. thermal deformation) is generated by the temperature difference between the exhaust gas passing through the vaporizing portion 110 and the engine coolant flowing through the condensing portion 130. The heat stress becomes larger, as a distance between the passage portions 163 and 164 becomes longer. However, the distance between the passage portions 163 and 164 can be made shorter by arranging them closer to each other. As a result, the heat stress generated at the passage portions 163 and 164 can be reduced.

The fluid flow-in passage 163 is arranged at the position higher than the liquid level D, so that the fluid flow-in passage 163 may not be filled with the water, and thereby the steam vaporized at the vaporizing portion 110 may not be held within the space of the vaporizing portion 110.

As the valve device 150 is also arranged at the position higher than the liquid level D, the function of the valve device 150 may not be blocked by frost of the water. In other words, in the case that the valve device 150 was arranged at a position lower than the liquid level D, the valve device 150 may be frozen together with the water when the waste heat collecting apparatus 100 is not operated in a low-temperature environment. When the valve device 150 is frozen, the on-off operation thereof can not be carried out, and the circulation of the working fluid in the waste heat collecting apparatus 100 is thereby blocked until the surrounding portion of the valve device 150 has been defrosted. Namely, the waste heat collecting apparatus 100 can not start its operation.

According to the above embodiment, however, the above problem does not occur, because the valve device 150 is arranged at the position higher than the liquid level D so that it may not be frozen together with the water.

According to the above embodiment, the valve device 150 is arranged at the position higher than the liquid level D, and the lower end of the condensing portion 130 is arranged at the position higher than the lower end of the condensing portion 110 in the vertical direction. Accordingly, all of the water (the working fluid) in the apparatus 100 can be substantially pooled in the vaporizing portion 110 (no water is held in the condensing portion 130), during the waste heat collecting apparatus 100 is not operated. This means that the amount of the water to be charged into the apparatus 100 can be made smaller. Furthermore, the size of the condensing portion 130 can be made smaller, even in consideration of such a situation, in which all of the condensed water should be held in the condensing portion 130 during the operation of the apparatus 100 in which the valve device 150 is closed.

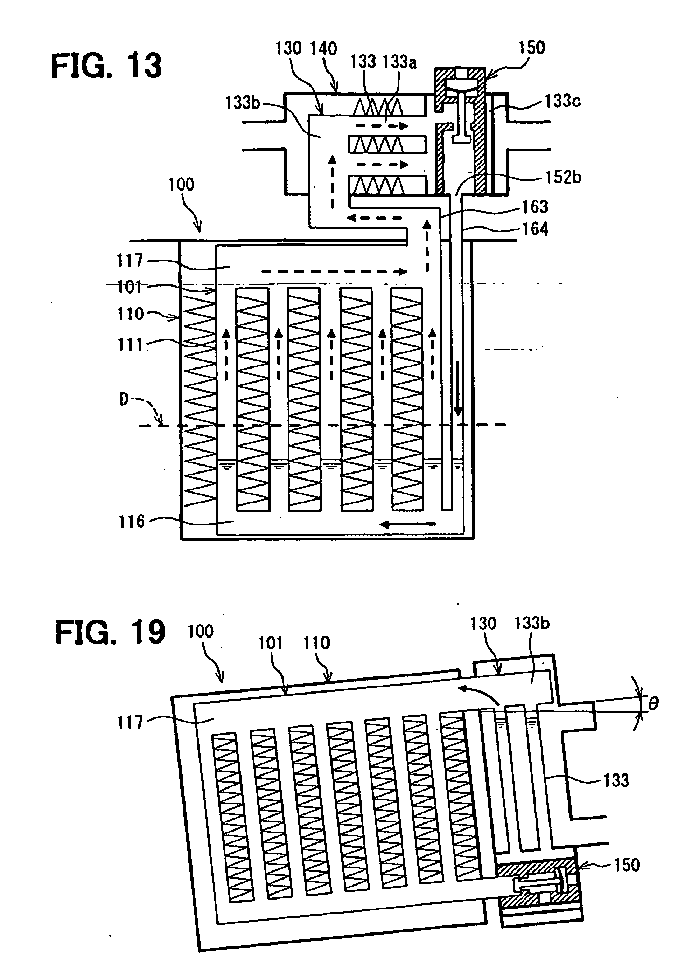

Fig. 13 shows a modification of the fifth embodiment. In this modification, the condensing portion 130 is arranged at an upper side of the vaporizing portion 110, wherein positions of the passage portions 163 and 164 as well as the valve device 150 are changed. As shown in Fig. 13 , the condensing portion 130 is rotated in an anti-clockwise direction by 90 degrees, when compared with that in Fig. 12.

The fluid flow-in passage 163 is a passage for connecting the upper passage 117 of the vaporizing portion 110 with one of the tubes 133 of the condensing portion 130, which is arranged at a side close to the vaporizing portion 110. The fluid flow-out passage 164 is a long slender passage portion for connecting the water outlet port 152b of the valve device 150 with the lower passage 116 of the vaporizing portion 110. The passage portions 163 and 164 are arranged closer to each other. According to the above modification, the fluid flow-in passage 163 as well as the valve device 150 is arranged at the position higher than the liquid level D, so that the same effects of the fifth embodiment of Fig. 12 can be obtained.

### (Sixth Embodiment)

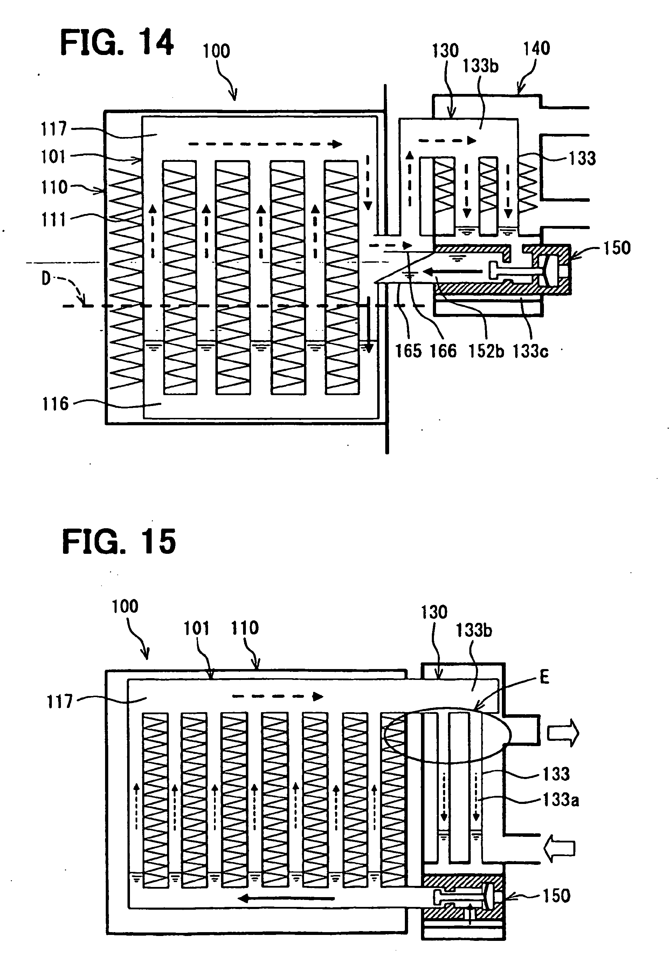

Fig. 14 shows a sixth embodiment of the invention, in which the fluid connecting portion is formed by one fluid pipe 165.

The fluid pipe 165 is extended such that the water outlet port 152b of the valve device 150 is communicated with the tube 111 of the vaporizing portion 110, which is arranged at the side close to the condensing portion 130. An upper portion of the fluid pipe 165 is communicated with the tube 133 of the condensing portion 130, which is arranged at the side close to the vaporizing portion 110. The fluid pipe 165 is also arranged at the position higher than the liquid level D.

A partitioning wall 166 is formed in the inside of the fluid pipe 165 for separating the space of the pipe 165 into an upper space and a lower space. As a result, the tube 111 of the vaporizing portion 110 is communicated with the tube 133 of the condensing portion 130 through the upper space formed in the fluid pipe 165 by the partitioning wall 166. In the similar manner, the water outlet port 152b of the valve device 150 is communicated with the tube 111 of the vaporizing portion 110 through the lower space formed in the fluid pipe 165 by the partitioning wall 166.

According to the above sixth embodiment, the fluid flow-in and flow-out passage portions (corresponding to the passages 163 and 164 in Fig. 12) are formed in the single fluid pipe 165. The distance between the fluid flow-in and flow-out passage portions is substantially zero. Accordingly, the heat stress can be further reduced.

In addition, the partitioning wall 166 is provided in the fluid pipe 165. Accordingly, a direct contact between the steam vaporized at the vaporizing portion 110 and the condensed water condensed at the condensing portion 130 is prevented by the partitioning wall 166. It is, therefore, avoided that the steam from the vaporizing portion 110 is cooled down (condensed) by the condensed water before entering into the condensing portion 130.

However, the partitioning wall 166 may not be provided, in the case that a degree of affection caused by the direct contact between the steam and the condensed water is relatively small.

### (Seventh Embodiment)

A seventh embodiment of the invention is shown in Figs. 15 to 18, in which a reverse flow preventing means is provided in the condensing portion 130, so that a reverse flow of the condensed water to the vaporizing portion 110 is suppressed.

The reverse flow preventing means is provided at an upstream side of an intermediate passage portion 133a of the tubes 133. The upstream side is indicated by a circle E in Fig. 15.

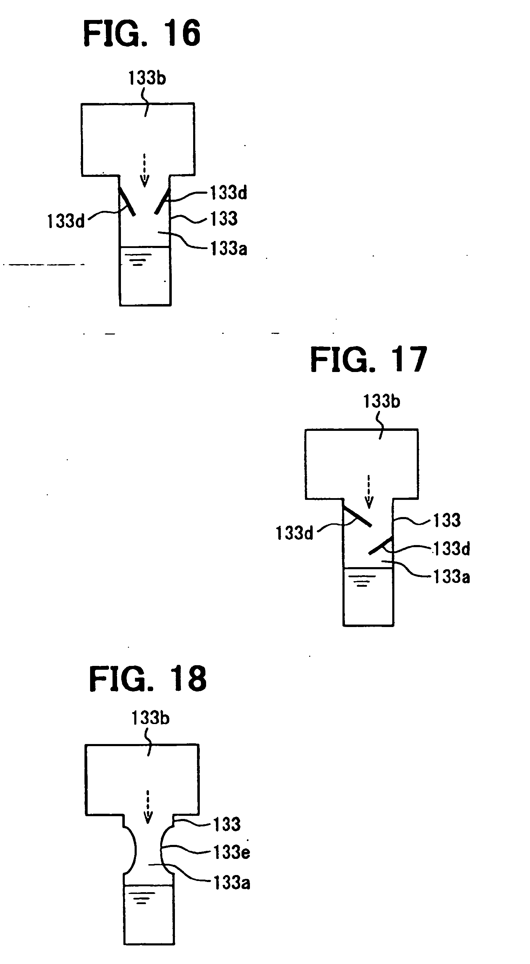

The reverse flow preventing means is, for example, formed as multiple plate members (like a window roof) 133d, as shown in Fig. 16. The plate member 133d is provided at an inner wall of the intermediate passage portion 133a, such that it is inclined in a direction of a flow of the steam, which enters into the tube 133 from the vaporizing portion 110. Multiple plate members 133d are provided to oppose to each other. The multiple plate members 133d may be alternately provided at the inner wall of the intermediate passage portion 133a, in the direction of the steam flow, as shown in Fig. 17. The reverse flow preventing means may be formed as a restricting portion 133e, so that an inner diameter of the intermediate passage portion 133a is made smaller, as shown in Fig. 18.

As already explained in the first embodiment of the invention, the valve device 150 is closed, when the inner pressure "Pi" of the working fluid in the heat pipe 101 is increased to exceed the first predetermined value (the valve closing pressure) "Pi-1", as a result that the vaporization has been continuously carried out in the vaporizing portion 110. The re-circulation of the condensed water in the heat pipe 101 (from the condensing portion 130 to the vaporizing portion 110) is stopped.

In such a situation, the vaporizing portion 110 is in a condition of a so-called "empty-heating" , so that the temperature of the vaporizing portion 110 may be increased to an extremely high value. When, in the above situation, the waste heat collecting apparatus 100 is inclined (e.g. by an angle θ in Fig. 19) because of a vehicle travel on a punishing road, or a vibration is applied to the apparatus 100 during the vehicle travel, the condensed water in the condensing portion 130 may be re-circulated to the vaporizing portion 110.

In the case that the condensed water was re-circulated to the vaporizing portion 110, which is in the condition of the "empty-heating", as in an arrow indicated in Fig. 19, the vaporizing portion 110 would be rapidly cooled down, so that the heat stress may occur. Furthermore, the re-circulated water may be vaporized at once to increase the pressure in the vaporizing portion 110. The heat transfer may be completed in the vaporizing portion, which deteriorates the strength as well as the function of the heat collecting apparatus 100.

According to the seventh embodiment of the invention, however, the above drawbacks can be overcome by the reverse flow preventing means.

### (Other modifications)

The valve device 150 (170) is provided at the downstream side of the condensing portion 130 in the above embodiments. However, the valve device may be provided at an upstream side of the vaporizing portion 110.

The valve device 150 (170) is operated to open or close its passage depending on operating parameters of the waste heat collecting apparatus, such as the inner pressure "Pi" of the working fluid of the heat pipe 101, or the temperature of the coolant for the engine in the above embodiments. However, the valve device may be operated to open or close the passage depending on a temperature of the working fluid for the heat pipe 101. For example, a thermo-wax type valve device, which is similar to the valve device 170 in Fig. 10, is used, wherein a thermo-wax portion (171) is exposed to the working fluid for the heat pipe instead of the coolant for the engine, so that the thermo-wax portion is operated depending on the temperature of the working fluid.

The heat insulating portion 120 is formed by multiple air spaces formed by the heat insulating plate 121 in the above embodiments. However, a heat insulating material may be disposed between the vaporizing portion 110 and the condensing portion 130.

The return pipe 161 is arranged in the area of the exhaust gas passage in the first embodiment. However, the return pipe may be arranged at such a portion outside of the exhaust gas passage, so that the heat insulating wall 162 may be eliminated.

## Claims

1. A waste heat collecting apparatus for an automotive vehicle comprising:
a loop-type heat pipe (101) having;
a vaporizing portion (110) arranged in an area for exhaust gas passage (113, 114, 118) for vaporizing working fluid filled in the heat pipe (101) with heat contained in exhaust gas from an engine (10);
a condensing portion (130) for condensing working fluid, which is vaporized in the vaporizing portion (110), by coolant for the engine (10); and
a connecting passage (161, 116a, 163, 164, 165) for connecting the condensing portion (130) with the vaporizing portion (110),
a valve device (150, 170) provided in the connecting passage (161, 116a, 163, 164, 165) between the condensing portion (130) and the vaporizing portion (110) for opening or closing the connecting passage,
wherein the valve device (150, 170) has a driving portion (153, 171) and a valve body (155, 173) connected with the driving portion (153, 171) for opening or closing the connecting passage, **characterised in that**
the driving portion (153, 171) is operated by at least one of the operating parameters, which comprise
- inner pressure of the working fluid in the heat pipe (101),
- temperature of the working fluid in the heat pipe (101), and
- temperature of the coolant, and
wherein the valve device (150, 170) is provided at a downstream side of the condensing portion (130) or an upstream side of the vaporizing portion (110).

2. A waste heat collecting apparatus according to claim 1, wherein
the valve device (150, 170) has a hysteresis for an opening and closing operation of the valve body (155, 173).

3. A waste heat collecting apparatus according to claim 2, wherein
the driving portion (153) is operated by the inner pressure of the working fluid in the heat pipe (101),
the valve body (155) closes the connecting passage (161, 164, 165) when the inner pressure is higher than a first predetermined pressure, and
the valve body (155) opens the connecting passage (161, 164, 165) when the inner pressure is lower than a second predetermined pressure,
wherein the first predetermined pressure is higher than the second predetermined pressure.

4. Awaste heat collecting apparatus according to claim 3, wherein
the first predetermined pressure is 0.1 MPa, and
the second predetermined pressure is 0.05 MPa.

5. A waste heat collecting apparatus according to claim 3, wherein water is used as the working fluid for the heat pipe (101),
the first predetermined pressure is 0.1 MPa, and
the second predetermined pressure is 0.6 kPa.

6. Awaste heat collecting apparatus according to claim 1, wherein
the valve device (150) has a bypass aperture (152e) such that a small amount of the working fluid is circulated from the condensing portion (130) to the vaporizing portion (110) even when the valve body (155) is moved to its closed position.

7. A waste heat collecting apparatus according to one of claims 1 to 5, further comprising:
a heat insulating portion (120) provided between the vaporizing portion (110) and the condensing portion (130) for insulating the condensing portion (130) from the vaporizing portion (110).

8. Awaste heat collecting apparatus according to claim 7, wherein
the heat insulating portion (120) is formed by multiple air spaces formed at a heat insulating plate (121), which is provided between the vaporizing portion (110) and the condensing portion (130).

9. A waste heat collecting apparatus according to one of claims 1 to 5, wherein
the connecting passage (163, 164, 165) is arranged at such a portion, which is outside of the area for the exhaust gas passage (113, 114, 118).

10. A waste heat collecting apparatus according to one of claims 1 to 5, wherein
the connecting passage (161) is arranged in the area for the exhaust gas passage (113, 114, 118).

11. A waste heat collecting apparatus according to claim 10, further comprising:
a heat insulating wall (162) provided at an upstream side of the connecting passage (161) with respect to the exhaust gas flow.

12. A waste heat collecting apparatus according to one of claims 1 to 5, wherein
the vaporizing portion (110) has multiple tubes (111) arranged in the area for the exhaust gas passage, such that longitudinal direction of the tubes (111) is arranged in a vertical direction,
the condensing portion (130) is arranged at an upper side of the vaporizing portion (110) and arranged in a coolant passage (140) through which the coolant for the engine (10) flows, and
the connecting passage (161) is a return pipe (161), a longitudinal length of which is almost equal to that of the tubes (111) of the vaporizing portion (110).

13. A waste heat collecting apparatus according to claim 12, wherein
the vaporizing portion (110) comprises multiple tube lines, each having multiple tubes (111), wherein the tube lines are arranged in a direction of the exhaust gas flow, and
the return pipe (161) is arranged at a downstream side of the multiple tube lines.

14. A waste heat collecting apparatus according to one of claims 1 to 5, wherein
the vaporizing portion (110) comprises;
multiple tubes (111) arranged in an area for the exhaust gas passage, such that longitudinal direction of the tubes (111) is arranged in a vertical direction,
a first header portion (117) for collecting the working fluid from the tubes (111), and
a second header portion (116) for distributing the condensed working fluid, which is condensed at the condensing portion (130), into the tubes (111),
the condensing portion (130) is arranged in a coolant passage (140) through which the coolant for the engine (10) flows, and
the condensing portion (130) is respectively connected to the first and second header portions (117, 116) through the connecting passage.

15. A waste heat collecting apparatus according to one of claims 1 to 5, wherein
the driving portion (153) of the valve device (150) has a diaphragm (153), which is displaced depending on the inner pressure of the working fluid for the heat pipe (101).

16. A waste heat collecting apparatus according to one of claims 1 to 5, wherein
the driving portion (171) of the valve device (170) has a thermo-wax portion (171), which is displaced depending on the temperature of the working fluid for the heat pipe (101) or the temperature of the coolant for the engine (10).

17. A waste heat collecting apparatus according to claim 16, wherein
the valve device (170) has the thermo-wax portion (171) expanded or contracted depending on the temperature of the coolant,
the valve body comprises a bellows (173) having one opened end connected to the thermo-wax portion (171), wherein the other end of the bellows (173) is closed, and
a communication port (174) is provided in the valve device (170) so that a part of the coolant enters into the inside space of the bellows (173).

18. A waste heat collecting apparatus according to one of claims 1 to 5, wherein
the connecting passage (163, 164) has a fluid flow-in passage (163) for allowing the working fluid vaporized at the vaporizing portion (110) to flow into the condensing portion (130), and a fluid flow-out passage (164) for returning the condensed working fluid condensed at the condensing portion (130) to the vaporizing portion (110),
the fluid flow-in and flow-out passages (163, 164) are arranged closer to each other, and
the fluid flow-in passage (163) is arranged at a position higher in a vertical direction than a liquid level of the working fluid in the vaporizing portion (110), which corresponds to a liquid level of the working fluid when the heat collecting apparatus is not in its operation.

19. A waste heat collecting apparatus according to one of claims 1 to 5, wherein
the connecting passage is formed by a single pipe (165), which is arranged at a position higher in a vertical direction than a liquid level of the working fluid in the vaporizing portion (110), which corresponds to a liquid level of the working fluid when the heat collecting apparatus is not in its operation.

20. A waste heat collecting apparatus according to claim 19, wherein
a partitioning wall (166) is provided in the pipe (165) for separating a space of the pipe (165) into an upper space for the working fluid and a lower space for the condensed working fluid, so that the condensed working fluid is not directly contacted with the working fluid.

21. A waste heat collecting apparatus according to one of claims 1 to 5, wherein
the valve device (150) is arranged at a position higher in a vertical direction than a liquid level of the working fluid in the vaporizing portion (110), which corresponds to a liquid level of the working fluid when the heat collecting apparatus is not in its operation.

22. A waste heat collecting apparatus according to one of claims 1 to 5, wherein
a reverse flow preventing means (133d, 133e) is provided in the condensing portion (130), so that a reverse flow of the condensed working fluid to the vaporizing portion (110) is suppressed.

23. A waste heat collecting apparatus according to claim 22, wherein
the reverse flow preventing means (133d, 133e) is formed by a plate member, which is inclined in a flow direction of the working fluid.

24. A waste heat collecting apparatus according to claim 22, wherein
the reverse flow preventing means (133d, 133e) is formed as a restricting portion, so that an inner diameter of a fluid passage for the working fluid is made smaller.

25. A waste heat collecting apparatus according to claim 1, wherein
the vaporizing portion (110) has multiple tubes (111) vertically extending, and a lower and an upper header tank portion (116, 117) provided at both longitudinal ends of the multiple tubes (111),
a water tank (140) is provided at an upper side of the vaporizing portion (110), through which coolant for the engine flows,
the condensing portion (130) is provided in an inside of the water tank (140) for condensing working fluid, which is vaporized in the vaporizing portion (110), by means of heat exchange with the coolant flowing through the water tank (140), wherein an upstream end of the condensing portion (130) is connected with the upper header tank portion (117) and a downstream end of the condensing portion (130) is operatively connected to the lower header tank portion (116),
a condensed water return portion (160) is provided between the downstream end of the condensing portion (130) and the lower header tank portion (116), and
the valve device (150) is provided in the water tank (140) for opening or closing a fluid passage between the downstream end of the condensing portion (130) and the condensedwater return portion (160), wherein the driving portion (153) is operated by an inner pressure of the working fluid in the heat pipe (101).

26. A waste heat collecting apparatus according to claim 1, wherein
the vaporizing portion (110) has multiple tubes (111) vertically extending, and a lower and an upper header tank portion (116, 117) provided at both longitudinal ends of the multiple tubes (111),
a water tank (140) is provided at an upper side of the vaporizing portion (110), through which coolant for the engine flows,
the condensing portion (130) is provided in an inside of the water tank (140) for condensing working fluid, which is vaporized in the vaporizing portion (110), by means of heat exchange with the coolant flowing through the water tank (140), wherein an upstream end of the condensing portion (130) is connected with the upper header tank portion (117) and a downstream end of the condensing portion (130) is operatively connected to the lower header tank portion (116), and
the valve device (150) is provided in the water tank (140) at a downstream side of the condensing portion (130) for opening or closing a fluid passage between the downstreamendof the condensing portion (130) and the lower header tank portion (116), wherein the driving portion (153) of the valve device (150)is operated by an inner pressure of the working fluid in the heat pipe (101).

## Patentansprüche

1. Abwärme-Aufnahmevorrichtung für ein selbstbewegendes Fahrzeug, umfassend:
eine schleifenartige Wärmeleitung (101), aufweisend;
einen Verdampfungsabschnitt (110), der in einem Bereich für Abgasdurchtritt (113, 114, 118) angeordnet ist, zum Verdampfen von Arbeitsfluid, welches in die Wärmeleitung (101) mit in Abgas von einem Motor (10) enthaltener Wärme gefüllt ist;
einen Kondensierungsabschnitt (130) zum Kondensieren von Arbeitsfluid, welches in dem Verdampfungsabschnitt (110) verdampft wird, durch Kühlmittel für den Motor (10); und
einen Verbindungsdurchtritt (161, 116a, 163, 164, 165) zum Verbinden des Kondensierungsabschnitts (130) mit dem Verdampfungsabschnitt (110),
eine Ventileinrichtung (150, 170), welche in dem Verbindungsdurchtritt (161, 116a, 163, 164, 165) zwischen dem Kondensierungsabschnitt (130) und dem Verdampfungsabschnitt (110) zum Öffnen oder Schließen des Verbindungsdurchtritts vorgesehen ist,
wobei die Ventileinrichtung (150, 170) einen Antriebsabschnitt (153, 171) und einen Ventilkörper (155, 173) aufweist, welcher mit dem Antriebsabschnitt (153, 171) zum Öffnen oder Schließen des Verbindungsdurchtritts verbunden ist, **dadurch gekennzeichnet, dass**
der Antriebsabschnitt (153, 171) durch zumindest eines von dem Betriebsparameter betrieben wird, welche umfassen
- Innendruck des Arbeitsfluids in der Wärmeleitung (101),
- Temperatur des Arbeitsfluids in der Wärmeleitung (101), und
- Temperatur des Kühlmittels, und
wobei die Ventileinrichtung (150, 170) an einer stromabwärtigen Seite des Kondensierungsabschnitts (130) oder an einer stromaufwärtigen Seite des Verdampfungsabschnitts (110) vorgesehen ist.

2. Abwärme-Aufnahmevorrichtung nach Anspruch 1, wobei
die Ventileinrichtung (150, 170) eine Hysterese für einen Öffnungs- und Schließbetrieb des Ventilkörpers (155, 173) aufweist.

3. Abwärme-Aufnahmevorrichtung nach Anspruch 2, wobei
der Antriebsabschnitt (153) durch den Innendruck des Arbeitsfluids in der Wärmeleitung (101) betrieben wird,
der Ventilkörper (155) den Verbindungsdurchtritt (161, 164, 165) schließt, wenn der Innendruck höher als ein erster vorbestimmter Druck ist, und
der Ventilkörper (155) den Verbindungsdurchtritt (161, 164, 165) öffnet, wenn der Innendruck niedriger als ein zweiter vorbestimmter Druck ist,
wobei der erste vorbestimmte Druck höher als der zweite vorbestimmte Druck ist.

4. Abwärme-Aufnahmevorrichtung nach Anspruch 3, wobei
der erste vorbestimmte Druck 0,1 MPa ist, und
der zweite vorbestimmte Druck 0,05 MPa ist.

5. Abwärme-Aufnahmevorrichtung nach Anspruch 3, wobei
Wasser als das Arbeitsfluid für die Wärmeleitung (101) verwendet wird,
der erste vorbestimmte Druck 0,1 MPa ist, und
der zweite vorbestimmte Druck 0,6 kPa ist.

6. Abwärme-Aufnahmevorrichtung nach Anspruch 1, wobei
die Ventileinrichtung (150) eine Bypass-Öffnung (152e) aufweist, so dass eine kleine Menge des Arbeitsfluids aus dem Kondensierungsabschnitt (130) zu dem Verdampfungsabschnitt (110) zirkuliert wird, selbst wenn der Ventilkörper (155) in seine geschlossene Position bewegt ist.

7. Abwärme-Aufnahmevorrichtung nach einem der Ansprüche 1 bis 5, ferner umfassend:
einen Wärme-Isolationsabschnitt (120), welcher zwischen dem Verdampfungsabschnitt (110) und dem Kondensierungsabschnitt (130) vorgesehen ist zum Isolieren des Kondensierungsabschnitts (130) gegenüber dem Verdampfungsabschnitt (110).

8. Abwärme-Aufnahmevorrichtung nach Anspruch 7, wobei
der Wärme-Isolationsabschnitt (120) durch mehrere Lufträume ausgebildet ist, welche an einer Wärme-Isolationsplatte (121) ausgebildet sind, welche zwischen dem Verdampfungsabschnitt (110) und dem Kondensierungsabschnitt (130) vorgesehen ist.

9. Abwärme-Aufnahmevorrichtung nach einem der Ansprüche 1 bis 5, wobei
der Verbindungsabschnitt (163, 164, 165) an einem solchen Abschnitt angeordnet ist, welcher außerhalb des Bereichs für den Abgasdurchtritt (113, 114, 118) ist.

10. Abwärme-Aufnahmevorrichtung nach einem der Ansprüche 1 bis 5, wobei
der Verbindungsdurchtritt (161) in dem Bereich für den Abgasdurchtritt (113, 114, 118) angeordnet ist.

11. Abwärme-Aufnahmevorrichtung nach Anspruch 10, ferner umfassend:
eine Wärme-Isolierungswand (162), welche an einer stromaufwärtigen Seite des Verbindungsdurchtritts (161) bezüglich der Abgasströmung vorgesehen ist.

12. Abwärme-Aufnahmevorrichtung nach einem der Ansprüche 1 bis 5, wobei
der Verdampfungsabschnitt (110) mehrere Rohre (111) aufweist, welche in dem Bereich für den Abgasdurchtritt angeordnet sind, so dass eine Längsrichtung der Rohre (111) in einer Vertikalrichtung angeordnet ist,
der Kondensierungsabschnitt (130) an einer oberen Seite des Verdampfungsabschnitts (110) angeordnet ist und in einem Kühlmitteldurchtritt (140) angeordnet ist, durch welchen das Kühlmittel für den Motor (10) strömt, und
der Verbindungsdurchtritt (161) eine Rückführleitung (161) ist, dessen längsgerichtete Länge annähernd gleich der der Rohre (111) des Verdampfungsabschnitts (110) ist.

13. Abwärme-Aufnahmevorrichtung nach Anspruch 12, wobei
der Verdampfungsabschnitt (110) mehrere Rohrlinien umfasst, wobei jede mehrere Rohre (111) aufweist, wobei die Rohrlinien in einer Richtung der Abgasströmung angeordnet sind, und
die Rückführungsleitung (161) an einer stromabwärtigen Seite der mehreren Rohrlinien angeordnet ist.

14. Abwärme-Aufnahmevorrichtung nach einem der Ansprüche 1 bis 5, wobei der Verdampfungsabschnitt (110) umfasst;
mehrere Rohre (111), welche in einem Bereich für den Abgasdurchtritt angeordnet sind, so dass eine Längsrichtung der Rohre (111) in einer Vertikalrichtung angeordnet ist,
einen ersten Sammelabschnitt (117) zum Aufnehmen des Arbeitsfluids von den Rohren (111), und
einen zweiten Sammelabschnitt (116) zum Verteilen des kondensierten Arbeitsfluids, welches bei dem Kondensierungsabschnitt (130) kondensiert wird, in die Rohre (111),
wobei der Kondensierungsabschnitt (130) in einem Kühlmitteldurchtritt (140) angeordnet ist, durch welchen das Kühlmittel für den Motor (10) strömt, und
wobei der Kondensierungsabschnitt (130) jeweils an dem ersten und dem zweiten Sammelabschnitt (117, 116) durch den Verbindungsdurchtritt verbunden ist.

15. Abwärme-Aufnahmevorrichtung nach einem der Ansprüche 1 bis 5, wobei
der Antriebsabschnitt (153) der Ventileinrichtung (150) ein Diaphragma (153) aufweist, welches in Abhängigkeit von dem Innendruck des Arbeitsfluids für die Wärmeleitung (101) verschoben wird.

16. Abwärme-Aufnahmevorrichtung nach einem der Ansprüche 1 bis 5, wobei
der Antriebsabschnitt (171) der Ventileinrichtung (170) einen Thermowachsabschnitt (171) aufweist, welcher in Abhängigkeit von der Temperatur des Arbeitsfluids für die Wärmeleitung (101) oder der Temperatur des Kühlmittels für den Motor (10) verschoben wird.

17. Abwärme-Aufnahmevorrichtung nach Anspruch 16, wobei
die Ventileinrichtung (170) den Thermowachsabschnitt (171) in Abhängigkeit von der Temperatur des Kühlmittels expandiert oder kontrahiert hat,
der Ventilkörper einen Faltenbalg (173) umfasst, welcher ein geöffnetes Ende aufweist, das an dem Thermowachsabschnitt (171) angeschlossen ist, wobei das andere Ende des Faltenbalgs (173) geschlossen ist, und
eine Verbindungsöffnung (174) in der Ventileinrichtung (170) vorgesehen ist, so dass ein Teil des Kühlmittels in den inneren Raum des Faltenbalgs (173) eintritt.

18. Abwärme-Aufnahmevorrichtung nach einem der Ansprüche 1 bis 5, wobei
der Verbindungsdurchtritt (163, 164) einen Fluid-Einströmdurchtritt (163) aufweist, um dem Arbeitsfluid, das bei dem Verdampfungsabschnitt (110) verdampft wird, zu ermöglichen, in den Kondensierungsabschnitt (130) einzuströmen, und einen Fluid-Ausströmdurchtritt (164) zum Rückführen des kondensierten Arbeitsfluids, das bei dem Kondensierungsabschnitt (130) kondensiert wird, zu dem Verdampfungsabschnitt (110),
der Fluid-Einström- und Fluid-Ausströmdurchtritt (163, 164) näher aneinander angeordnet sind und wobei
der Fluid-Einströmdurchtritt (163) an einer Position angeordnet ist, welche in einer Vertikalrichtung höher als ein Flüssigkeitsniveau des Arbeitsfluids in dem Verdampfungsabschnitt (110) ist, welches einem Flüssigkeitsniveau des Arbeitsfluids entspricht, wenn die Wärme-Aufnahmevorrichtung nicht in ihrem Betrieb ist.

19. Abwärme-Aufnahmevorrichtung nach einem der Ansprüche 1 bis 5, wobei
der Verbindungsdurchtritt durch eine einzelne Leitung (165) ausgebildet ist, welche an einer Position angeordnet ist, die in einer Vertikalrichtung höher ist als ein Flüssigkeitsniveau des Arbeitsfluids in dem Verdampfungsabschnitt (110), welches einem Flüssigkeitsniveau des Arbeitsfluids entspricht, wenn die Wärme-Aufnahmevorrichtung nicht in ihrem Betrieb ist.

20. Abwärme-Aufnahmevorrichtung nach Anspruch 19, wobei
eine Abtrennwand (166) in der Leitung (165) zum Trennen eines Raums der Leitung (165) in einen oberen Raum für das Arbeitsfluid und einen unteren Raum für das kondensierte Arbeitsfluid vorgesehen ist, so dass das kondensierte Arbeitsfluid nicht direkt in Kontakt mit dem Arbeitsfluid kommt.

21. Abwärme-Aufnahmevorrichtung nach einem der Ansprüche 1 bis 5, wobei
die Ventileinrichtung (150) an einer Position angeordnet ist, die in einer Vertikalrichtung höher als ein Flüssigkeitsniveau des Arbeitsfluids in dem Verdampfungsabschnitt (110) ist, welches einem Flüssigkeitsniveau des Arbeitsfluids entspricht, wenn die Wärme-Aufnahmevorrichtung nicht in ihrem Betrieb ist.

22. Abwärme-Aufnahmevorrichtung nach einem der Ansprüche 1 bis 5, wobei
eine Rückströmungs-Verhinderungseinrichtung (133d, 133e) in dem Kondensierungsabschnitt (130) vorgesehen ist, so dass eine Rückströmung des kondensierten Arbeitsfluids zu dem Verdampfungsabschnitt (110) unterdrückt wird.

23. Abwärme-Aufnahmevorrichtung nach Anspruch 22, wobei
die Rückströmungs-Verhinderungseinrichtung (133d, 133e) durch ein Plattenelement ausgebildet ist, welches in einer Strömungsrichtung des Arbeitsfluids geneigt ist.

24. Abwärme-Aufnahmevorrichtung nach Anspruch 22, wobei
die Rückströmungs-Verhinderungseinrichtung (133d, 133e) als ein Begrenzungsabschnitt ausgebildet ist, so dass ein innerer Durchmesser eines Fluiddurchtritts für das Arbeitsfluid kleiner gemacht wird.

25. Abwärme-Aufnahmevorrichtung nach Anspruch 1, wobei
der Verdampfungsabschnitt (110) mehrere Rohre (111), die sich vertikal erstrecken, und einen unteren und einen oberen Sammeltankabschnitt (116, 117) aufweist, die an beiden Längsenden der mehreren Rohre (111) vorgesehen sind,
ein Wassertank (140) an einer oberen Seite des Verdampfungsabschnitts (110) vorgesehen ist, durch welchen Kühlmittel für den Motor strömt,
der Kondensierungsabschnitt (130) in einem Inneren des Wassertanks (140) zum Kondensieren von Arbeitsfluid vorgesehen ist, welches in dem Verdampfungsabschnitt (110) verdampft wird, dies mittels Wärmetausch mit dem Kühlmittel, welches durch den Wassertank (140) strömt, wobei ein stromaufwärtiges Ende des Kondensierungsabschnitts (130) an dem oberen Sammeltank (117) angeschlossen ist und ein stromabwärtiges Ende des Kondensierungsabschnitts (130) operativ an dem unteren Sammeltankabschnitt (116) angeschlossen ist,
ein Kondenswasser-Rückführabschnitt (160) zwischen dem stromabwärtigen Ende des Kondensierungsabschnitts (130) und dem unteren Sammeltankabschnitt (116) vorgesehen ist, und wobei
die Ventileinrichtung (150) in dem Wassertank (140) zum Öffnen oder Schließen eines Fluiddurchtritts zwischen dem stromabwärtigen Ende des Kondensierungsabschnitts (130) und dem Kondenswasser-Rückführabschnitt (160) vorgesehen ist, wobei der Antriebsabschnitt (153) durch einen Innendruck des Arbeitsfluids in der Wärmeleitung (101) betrieben wird.

26. Abwärme-Aufnahmevorrichtung nach Anspruch 1, wobei
der Verdampfungsabschnitt (110) mehrere Rohre (111) aufweist, die sich vertikal erstrecken, und einen unteren und einen oberen Tankabschnitt (116, 117), welche an beiden Längsenden der mehreren Rohre (111) vorgesehen sind,
ein Wassertank (140) an einer oberen Seite des Verdampfungsabschnitts (110) vorgesehen ist, durch welchen Kühlmittel für den Motor strömt,
der Kondensierungsabschnitt (130) in dem Inneren des Wassertanks (140) zum Kondensieren von Arbeitsfluid vorgesehen ist, welches in dem Verdampfungsabschnitt (110) verdampft wird, dies mittels Wärmetausch mit dem Kühlmittel, welches durch den Wassertank (140) strömt, wobei ein stromaufwärtiges Ende des Kondensierungsabschnitts (130) an dem oberen Tankabschnitt (117) angeschlossen ist und ein stromabwärtiges Ende des Kondensierungsabschnitts (130) operativ an dem unteren Tankabschnitt (116) angeschlossen ist, und wobei
die Ventileinrichtung (150) in dem Wassertank (140) an einer stromabwärtigen Seite des Kondensierungsabschnitts (130) zum Öffnen oder Schließen eines Fluiddurchtritts zwischen dem stromabwärtigen Ende des Kondensierungsabschnitts (130) und dem unteren Tankabschnitt (116) vorgesehen ist, wobei der Antriebsabschnitt (153) der Ventileinrichtung (150) durch einen Innendruck des Arbeitsfluids in der Wärmeleitung (101) betrieben wird.

## Revendications

1. Appareil de collecte de chaleur perdue pour un véhicule automobile comprenant :
un caloduc (101) de type boucle ayant :
une portion de vaporisation (101) agencée dans une zone pour un passage (113, 114, 118) de gaz d'échappement destinée à vaporiser un fluide de travail chargé dans le caloduc (101) avec la chaleur contenue dans les gaz d'échappement provenant d'un moteur (10) ;
une partie de condensation (130) destinée à condenser le fluide de travail, qui est vaporisé au niveau de la portion de vaporisation (110), par un liquide de refroidissement pour le moteur (10); et
un passage de raccordement (161, 116a, 163, 164, 165) destiné à connecter la portion de condensation (130) avec la portion de vaporisation (110),
un dispositif (150, 170) de soupape prévu dans le passage de raccordement (161, 116a, 163, 164, 165) entre la portion de condensation (130) et la portion de vaporisation (110) destiné à ouvrir ou à fermer le passage de raccordement,
où le dispositif (150, 170) de soupape possède une partie d'entraînement (153, 171) et un corps (150, 170) de soupape relié à la partie d'entraînement (153, 171) destiné à ouvrir ou à fermer le passage de raccordement, **caractérisé en ce que**
la partie d'entraînement (153, 171) est actionnée par au moins l'un des paramètres de service, soit
une pression interne du fluide de travail dans le caloduc (101),
une température du fluide de travail dans le caloduc (101), et
une température du liquide de refroidissement, et
où le dispositif (150, 170) de soupape est prévu en aval de la portion de vaporisation (110).

2. Appareil de collecte de chaleur perdue selon la revendication 1, où le dispositif de soupape (150, 173) présente une hystérésis pour une opération d'ouverture et de fermeture du corps (150, 170) de soupape.

3. Appareil de collecte de chaleur perdue selon la revendication 2, où la partie d'entraînement (153) est exploitée par la pression interne du fluide de travail dans le caloduc (101),
le corps (155) de soupape ferme le passage de raccordement (161, 164, 165) lorsque la pression interne est supérieure à une première pression prédéterminée, et
le corps (155) de soupape ouvre le passage de raccordement (161, 164, 165) lorsque la pression interne est inférieure à une deuxième pression prédéterminée,
où la première pression prédéterminée est supérieure à la deuxième pression prédéterminée.

4. Appareil de collecte de chaleur perdue selon la revendication 3, où la première pression prédéterminée est de 0,1 MPa, et
la deuxième pression prédéterminée est de 0,05 MPa.

5. Appareil de collecte de chaleur perdue selon la revendication 3, où
l'eau est utilisée en tant que le fluide de travail pour le caloduc (101),
la première pression prédéterminée est de 0,1 MPa, et la deuxième pression prédéterminée est de 0,6 KPa.

6. Appareil de collecte de chaleur perdue selon la revendication 1, où
le dispositif de soupape (150) possède un orifice de contournement (152e) tel qu'une petite quantité du fluide de travail peut circuler de la portion de condensation (130) à la portion de vaporisation (110) même lorsque le corps (155) de soupape est déplacé vers sa position fermée.

7. Appareil de collecte de chaleur perdue selon l'une quelconque des revendications 1 à 5, comprenant en outre :
une portion d'isolation thermique (120) prévue entre la portion de vaporisation (110) et la portion de condensation (130) destinée à isoler la portion de condensation (130) de la portion de vaporisation (110).

8. Appareil de collecte de chaleur perdue selon la revendication 7, où la portion d'isolation thermique (120) est formée par plusieurs espaces d'air formés au niveau d'une plaque d'isolation thermique (121), qui est prévue entre la portion de vaporisation (110) et la portion de condensation (130).

9. Appareil de collecte de chaleur perdue selon l'une quelconque des revendications 1 à 5, où
le passage de raccordement (163, 164, 165) est agencé au niveau d'une portion qui est située à l'extérieur de la zone de passage (113, 114, 118) des gaz d'échappement.

10. Appareil de collecte de chaleur perdue selon l'une quelconque des revendications 1 à 5, où
le passage de raccordement (161) est agencé dans la zone destinée au passage (113, 114, 118) des gaz d'échappement.

11. Appareil de collecte de chaleur perdue selon la revendication 10, comprenant en outre :
une paroi d'isolation thermique (162) prévue en amont du passage de raccordement (161) par rapport à l'écoulement des gaz d'échappement.

12. Appareil de collecte de chaleur perdue selon l'une quelconque des revendications 1 à 5, où
la portion de vaporisation (110) possède plusieurs tubes (111) agencés dans la zone pour le passage des gaz d'échappement, de telle sorte qu'une direction longitudinale des tubes (111) soit agencée selon une direction verticale,
la portion de condensation (130) est agencée au niveau d'un coté supérieur de la portion de vaporisation (110) et agencée dans un passage (140) de liquide refroidissement à travers lequel le liquide de refroidissement pour le moteur (10) s'écoule, et
le passage de raccordement (161) représente un conduit de retour (161), dont la longueur longitudinale est presque égale à celle des tubes (111) de la portion de vaporisation (110).

13. Appareil de collecte de chaleur perdue selon la revendication 12, où
la portion de vaporisation (110) comprend des lignes à plusieurs tubes, ayant chacune plusieurs tubes (111), où les lignes à tubes sont agencées dans une direction de l'écoulement des gaz d'échappement.
le conduit de retour (161) est agencé en aval des lignes à plusieurs tubes.

14. Appareil de collecte de chaleur perdue selon l'une quelconque des revendications 1 à 5, où
la portion de vaporisation (110) comprend :
plusieurs tubes (111) agencés dans une zone pour le passage des gaz d'échappement, de telle sorte que la direction longitudinale des tubes (111) soit agencée dans une direction verticale,
une première portion de tête (117) destinée à collecter le fluide de travail à partir des tubes (111), et
une deuxième portion de tête (116) destinée à distribuer le fluide de travail condensé, qui est condensé au niveau de la portion de condensation (130), dans les tubes (111),
la portion de condensation (130) est agencée dans un passage de liquide de refroidissement (140) à travers lequel le liquide de refroidissement pour le moteur (10) s'écoule, et
la portion de condensation (130) est respectivement reliée aux première et deuxième portions de tête (117, 116) à travers le passage de raccordement.

15. Appareil de collecte de chaleur perdue selon l'une quelconque des revendications 1 à 5, où
la portion d'entraînement (153) du corps (150) de soupape possède un diaphragme (153), qui est déplacé selon la pression interne du fluide de travail dans le caloduc (101).

16. Appareil de collecte de chaleur perdue selon l'une quelconque des revendications 1 à 5, où
la portion d'entraînement (171) du dispositif de soupape (170) possède une portion à cire thermique (171), qui est déplacé selon la température du fluide de travail pour le caloduc (101) ou selon la température du liquide refroidissement dans le moteur (10).

17. Appareil de collecte de chaleur perdue selon la revendication 16, où
le dispositif de soupape (170) possède la portion de cire thermique (171) qui se détend ou se contracte selon la température du liquide de refroidissement,
le corps de soupape comprend un soufflet (173) ayant une extrémité ouverte reliée à la portion de cire thermique (171), où l'autre extrémité du soufflet (173) est fermée, et
un orifice de communication (174) est prévu dans le dispositif de soupape (170) pour qu'une partie du liquide de refroidissement rentre à l'intérieur du soufflet (173).

18. Appareil de collecte de chaleur perdue selon l'une quelconque des revendications 1 à 5, où
le passage de raccordement (163, 164) possède un passage d'entrée (163) d'écoulement fluidique pour permettre au fluide de travail vaporisé au niveau de la portion de vaporisation (110) de s'écouler dans la portion de condensation (130), et un passage de sortie d'écoulement fluidique (164) destiné à renvoyer le fluide de travail condensé au niveau de la portion de condensation (130) à la portion de vaporisation (110),
les passages d'entrée et de sortie d'écoulement fluidique (163, 164) sont agencés plus rapprochés l'un de l'autre, et
le passage d'entrée (163) d'écoulement fluidique est agencé à une position plus haute dans une direction verticale qu'un niveau du liquide du fluide de travail au niveau de la portion de vaporisation (110), qui correspond à un niveau du liquide du fluide de travail lorsque l'appareil de collecte de chaleur perdue n'est pas en service.

19. Appareil de collecte de chaleur perdue selon l'une quelconque des revendications 1 à 5, où
le passage de raccordement est formé par un seul tuyau (165), qui est agencé à une position plus haute dans une direction verticale qu'un niveau du liquide du fluide de travail dans la portion de vaporisation (110), qui correspond à un niveau du liquide du fluide de travail lorsque l'appareil de collecte de chaleur perdue n'est pas en service.

20. Appareil de collecte de chaleur perdue selon la revendication 19, où
une paroi de séparation (166) est prévue dans le tuyau (165) pour séparer un espace du tuyau (165) en un espace supérieur pour le fluide de travail et en un espace inférieur pour le fluide de travail condensé, de telle sorte que le fluide de travail condensé ne se retrouve pas directement en contact avec le fluide de travail.

21. Appareil de collecte de chaleur perdue selon l'une quelconque des revendications 1 à 5, où
le dispositif de soupape (150) est agencé à une position plus haute dans une direction verticale qu'un niveau de liquide du fluide de travail dans la portion de vaporisation (110), qui correspond à un niveau du liquide du fluide de travail lorsque l'appareil de collecte de chaleur perdue n'est pas en service.

22. Appareil de collecte de chaleur perdue selon l'une quelconque des revendications 1 à 5, où
un moyen de prévention d'écoulement inverse (133d 133e) prévu dans la portion de condensation (130), pour qu'un écoulement inverse du fluide de travail condensé vers la portion de vaporisation (110) ne puisse pas avoir lieu.

23. Appareil de collecte de chaleur perdue selon la revendication 22, où
le moyen de prévention d'écoulement inverse (133d, 133e) est formé par un élément de plaque, qui est incliné dans une direction d'écoulement du fluide de travail.

24. Appareil de collecte de chaleur perdue selon la revendication 22, où
le moyen de prévention d'écoulement inverse (133d, 133e) est formé comme une portion de restriction, de telle sorte qu'un diamètre interne d'un passage de fluide pour le fluide de travail soit réduit.

25. Appareil de collecte de chaleur perdue selon la revendication 1, où
la portion de vaporisation possède plusieurs tubes (111) s'étendant verticalement, et des portions (116, 117) de réservoir de tête inférieure et supérieure prévues au niveau des deux extrémités longitudinales des plusieurs tubes (111),
un réservoir d'eau (140) est prévu à un coté supérieur de la portion de vaporisation (110), à travers lequel du liquide de refroidissement pour le moteur s'écoule,
la portion de condensation (130) est prévu à l'intérieur du réservoir (140) d'eau pour condenser du fluide de travail, qui est vaporisé au niveau de la portion de vaporisation (110), au moyen d'un échange de chaleur avec le liquide de refroidissement s'écoulant à travers le réservoir (140) d'eau, où une extrémité amont de la portion de condensation (130) est reliée à la portion (117) de réservoir de tête supérieure et une extrémité aval de la portion de condensation (130) est fonctionnellement reliée à la portion (116) de réservoir de tête inférieure,
une portion (160) de retour d'eau condensée est prévue entre l'extrémité aval de la portion de condensation (130) et la portion (116) de réservoir de tête inférieure, et
le dispositif de soupape (150) est prévu dans le réservoir d'eau (140) pour ouvrir ou fermer un passage de fluide entre l'extrémité aval de la portion de condensation (130) et la portion (160) de retour d'eau condensée, où la portion d'entraînement (153) est actionnée par une pression interne du fluide de travail dans le caloduc (101).

26. Appareil de collecte de chaleur perdue selon la revendication 1, où
la portion de vaporisation (110) possède plusieurs tubes (111) s'étendant verticalement, et des portions (116, 117) de réservoir de tête inférieure et supérieure prévues aux deux extrémités longitudinales des plusieurs tubes (111), et
un réservoir d'eau (140) est prévu à un coté supérieur de la portion de vaporisation (110), à travers lequel du liquide de refroidissement pour le moteur s'écoule,
la portion de condensation (130) est prévue à l'intérieur du réservoir (140) pour condenser du fluide de travail, qui est vaporisé dans la portion de vaporisation (110), au moyen d'un échange de chaleur avec le liquide de refroidissement s'écoulant à travers le réservoir (140) d'eau, où une extrémité amont de la portion de condensation (130) est reliée à la portion (117) de réservoir de tête supérieure et une extrémité aval de la portion de condensation (130) est fonctionnellement reliée à la portion (116) de réservoir de tête inférieure, et
le dispositif soupape (150) est prévu dans le réservoir d'eau (140) à un côté aval de la portion de condensation (130) pour ouvrir ou fermer un passage de fluide entre l'extrémité aval de la portion de condensation (130) et la portion (116) de réservoir de tête inférieure, où la portion d'entraînement (153) du dispositif de soupape (150) est actionnée par un pression interne du fluide de travail dans le caloduc (101).
